# EUROPEAN PATENT APPLICATION

(11) **EP 4 319 224 A1**
(43) Date of publication of application: **07.02.2024**
(21) Application number: 22781559.4
(22) Date of filing: 29.03.2022
(51) Int. Cl.: H04W 8/00, H04W 72/12, H04W 80/02, H04W 92/18

(54) **METHOD AND DEVICE FOR TRANSMITTING SIDELINK RELAY SEARCH MESSAGE ON BASIS OF PRIORITY IN WIRELESS COMMUNICATION SYSTEM**

(30) Priority: 29.03.2021 KR 20210040545
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2022/004388
(87) International publication number: WO 2022/211440

(57) **Abstract**

The disclosure relates to a method performed by a user equipment (UE) for transmitting a sidelink relay discovery message in a wireless communication system, the method comprising identifying a priority of a logical channel corresponding to the sidelink relay discovery message, configuring a medium access control protocol data unit (MAC PDU) including the sidelink relay discovery message, based on the identified priority, and transmitting the MAC PDU, wherein the MAC PDU is configured not to comprise a general sidelink message.

## Description

### Technical Field

The disclosure relates to a wireless communication system. More particularly, the disclosure relates to a method and apparatus for discovering a relay terminal capable of supporting direct communication when direct communication is performed between terminals based on a sidelink in a wireless communication system.

### Background Art

In order to meet increasing demand with respect to wireless data traffic after the commercialization of 4^{th} generation (4G) communication systems, efforts have been made to develop 5^{th} generation (5G) or pre-5G communication systems. For this reason, the 5G or pre-5G communication system is also called a beyond 4^{th}-generation (4G) network communication system or post long term evolution (LTE) system.

In order to achieve a high data rate, 5G communication systems are being developed to be implemented in a super-high frequency band (millimeter wave (mmWave)), e.g., a band of 60 GHz. To reduce propagation loss of radio waves and increase a transmission range of radio waves in the ultra-high frequency bands, beamforming, massive multiple-input multiple-output (MIMO), full dimensional MIMO (FD-MIMO), array antenna, analog beamforming, and large-scale antenna techniques are under discussion.

To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system.

In addition, in the 5G system, an advanced coding modulation (ACM) method, e.g., hybrid FSK and QAM modulation (FQAM), sliding window superposition coding (SWSC), and advanced access technology, e.g., filter bank multi carrier (FBMC), non-orthogonal multiple access (NOMA), and sparse code multiple access (SCMA) are being developed.

The 5G system considers supporting various services, compared to an existing 4G system. For example, the most representative services may include an enhanced mobile broadband (eMBB) service, an ultra-reliable and low-latency communication (URLLC) service, a massive machine type communication (mMTC) service, and an evolved multimedia broadcast/multicast service (eMBMS). A system providing the URLLC service may be referred to as a URLLC system, and a system providing the eMBB service may be referred to as an eMBB system. Also, the terms "service" and "system" may be interchangeably used.

Among the above services, the URLLC service is a service that is newly considered in the 5G system, unlike the existing 4G system, and the service satisfies conditions such as ultra-high reliability (e.g., an error rate of about 10⁻⁵ or less) and low latency (e.g., a latency time of about 0.5 msec or less), compared to other services. In order to satisfy these strict conditions, the URLLC service may need application of a transmission time interval (TTI) shorter than that of the eMBB service, and various operation methods utilizing the same are under consideration.

In the meantime, the Internet is evolving from a human-oriented connectivity network where humans generate and consume information to an Internet of things (loT) network where distributed entities or things transmit, receive and process information without human intervention. Internet of Everything (IoE) technology, which is a combination of loT technology and big data processing technology through connection with a cloud server or the like, is also emerging. In order to implement the loT, technology elements such as sensing technology, wired/wireless communication and network infrastructures, service interface technology, and security technology are required, and thus, technologies for inter-object connection, such as sensor network, machine to machine (M2M) communication, or machine-type communication (MTC), have recently been studied.

In an loT environment, intelligent Internet technology (IT) services that collect and analyze data generated by connected objects and create new value in human life may be provided. The loT may be applied to fields, such as smart homes, smart buildings, smart cities, smart cars or connected cars, smart grid, health care, smart home appliances, and advanced medical services through convergence and combination between existing information technologies (IT) and various industrial applications.

Accordingly, various attempts have been made to apply 5G communication systems to loT networks. For example, technologies such as sensor network, M2M communication, and MTC are implemented by 5G communication technologies such as beamforming, MIMO, and array antenna. The application of a cloud-RAN as big data processing technology may also be considered as an example of convergence of 5G technology and loT technology.

Also, direct communication between terminals using the 5G communication system, e.g., sidelink communication, is being studied, and the communication between terminals, e.g., vehicle-to-everything (V2X), is applied to public safety networks and is expected to provide various services to users.

### Disclosure

### Technical Problem

In direct communication between terminals using sidelink communication, there is a demand for a method of utilizing a sidelink relay capable of supporting an extension of service coverage, an increase in data transmission reliability, and a reduction in power consumption of a terminal. The disclosure provides a method and apparatus for determining a priority of a relay discovery message used in a sidelink relay discovery procedure, in order to support a terminal performing sidelink-based data transmission/reception in a wireless communication system.

The technical problems to be solved in the disclosure are not limited to the above technical problems, and other technical problems not mentioned may be clearly understood by one of ordinary skill in the art based on the descriptions below.

### Technical Solution

According to an embodiment of the disclosure, a method performed by a user equipment (UE) for transmitting a sidelink relay discovery message in a wireless communication system includes configuring a medium access control protocol data unit (MAC PDU) including the sidelink relay discovery message based on a priority of a logical channel corresponding to the sidelink relay discovery message, determining whether to transmit the configured MAC PDU, based on a priority of the configured MAC PDU, and transmitting the sidelink relay discovery message, based on the determination.

According to an embodiment of the disclosure, a method by which a user equipment (UE) determines a priority of a sidelink relay discovery message in a wireless communication system includes at least one of determining, by the UE, priority configuration of the sidelink relay discovery message, comparing a priority of the sidelink relay discovery message with a priority of a Uu message, comparing a priority of the sidelink relay discovery message with a priority of a general sidelink message, determining a message to be preferentially transmitted when the UE is unable to simultaneously transmit the sidelink relay discovery message and the Uu message, determining a message to which a sidelink transmission resource is to be preferentially allocated when the UE has to transmit the sidelink relay discovery message or the general sidelink message, determining, by the UE, a sidelink relay discovery message reception priority and a priority of the Uu message, determining a message to be preferentially received when the UE is unable to simultaneously receive the sidelink relay discovery message and the Uu message, and determining a message to be preferentially received or transmitted when the UE is unable to simultaneously perform sidelink relay discovery message reception and Uu message transmission.

According to an embodiment of the disclosure, a method performed by a user equipment (UE) for transmitting a sidelink relay discovery message includes identifying a priority of a logical channel corresponding to the sidelink relay discovery message, and transmitting the sidelink relay discovery message, based on the identified priority.

According to an embodiment of the disclosure, a user equipment (UE) operating as a sidelink relay UE or a sidelink remote UE in a wireless communication system includes a transceiver, a memory, and a processor operatively connected to the transceiver and the memory, the processor being configured to identify a priority of a logical channel corresponding to a sidelink relay discovery message, and transmit the sidelink relay discovery message, based on the identified priority.

### Advantageous Effects

According to an embodiment of the disclosure, a service may be efficiently provided to a user in a wireless communication system, and service coverage may be extended.

The effects obtainable in the disclosure are not limited to the above effects, and other effects not mentioned may be clearly understood by one of ordinary skill in the art from the description below.

### Description of Drawings

FIG. 1A is a diagram illustrating a wireless communication system, according to an embodiment of the disclosure.
FIG. 1B is a diagram illustrating a wireless communication system, according to another embodiment of the disclosure.
FIG. 2 is a block diagram illustrating a configuration of a base station (BS) in a wireless communication system, according to an embodiment of the disclosure.
FIG. 3 is a block diagram illustrating a configuration of a user equipment (UE) in a wireless communication system, according to an embodiment of the disclosure.
FIG. 4 is a block diagram illustrating a configuration of a communicator in a wireless communication system, according to an embodiment of the disclosure.
FIG. 5 is a block diagram illustrating a structure of a time-frequency resource of a wireless communication system, according to an embodiment of the disclosure.
FIG. 6A is a diagram for describing a sidelink relay discovery procedure, according to an embodiment of the disclosure.
FIG. 6B is a diagram for describing a sidelink relay discovery procedure, according to another embodiment of the disclosure.
FIG. 7 is a flowchart for describing an operation in which a UE determines a transmission priority of a sidelink relay discovery message, according to an embodiment of the disclosure.
FIG. 8 is a flowchart for describing an operation in which a UE determines a transmission priority of a sidelink relay discovery message, according to an embodiment of the disclosure.
FIG. 9 is a flowchart for describing an operation in which a UE determines a transmission priority of a sidelink relay discovery message, according to an embodiment of the disclosure.

### Mode for Invention

Hereinafter, exemplary embodiments of the disclosure will be described in detail with reference to accompanying drawings. In the accompanying drawings, it will be understood that like reference numerals denote like elements. Also, detailed descriptions of well-known functions and configurations in the art may be omitted when it is deemed that they may unnecessarily obscure the essence of the disclosure.

In the following descriptions of embodiments in the specification, descriptions of techniques that are well known in the art and are not directly related to the disclosure may be omitted. This is to clearly convey the gist of the disclosure by omitting an unnecessary description.

For the same reason, some elements in the accompanying drawings may be exaggerated, omitted, or schematically illustrated. Also, the size of each component does not entirely reflect the actual size, and each component is not limited to that illustrated in the drawings. In the drawings, the same or corresponding elements are denoted by the same reference numerals.

The advantages and features of the disclosure and methods of achieving them will become apparent with reference to embodiments of the disclosure described in detail below along with the attached drawings. The disclosure may, however, be embodied in many different forms and should not be construed as limited to embodiments of the disclosure set forth herein. These embodiments of the disclosure may be provided so that this disclosure will be thorough and complete, and will fully convey the scope of the disclosure to one of ordinary skill in the art. The disclosure may be defined by the appended claims. In the specification, the same reference numerals denote the same elements.

In various embodiments, it will be understood that combinations of blocks in flowcharts or process flow diagrams may be performed by computer program instructions. These computer program instructions may be loaded into a processor of a general-purpose computer, special purpose computer, or other programmable data processing apparatus, and the instructions, which are executed via the processor of the computer or other programmable data processing apparatus may generate means for implementing the functions specified in the flowchart block(s). These computer program instructions may also be stored in a computer-executable or computer-readable memory that may direct the computer or other programmable data processing equipment to function in a particular manner. The instructions stored in the computer-executable or computer-readable memory may produce an article of manufacture including instruction means for implementing the functions specified in the flowchart block(s). The computer program instructions may also be loaded onto the computer or other programmable data processing equipment. A series of operational steps may be performed on the computer or other programmable equipment to produce a computer implemented process, and thus the instructions executed on the computer or other programmable equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In this case, the term "... unit" as herein used refers to a software or hardware component, such as field programmable gate array (FPGA) or application specific integrated circuit (ASIC) which plays a certain role. However, the term "... unit" does not mean to be limited to software or hardware. A "... unit" may be configured to be in an addressable storage medium or may be configured to operate one or more processors. Accordingly, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer elements and "... units" or may be further separated into additional components and "... units". Furthermore, components and "... units" may be implemented to operate one or more central processing units (CPUs) in a device or a secure multimedia card.

When particularly describing embodiments of the disclosure, a new radio access network (RAN) (NR) that is a radio access network and a packet core (5G system, 5G core network, or next generation (NG) core) that is a core network in 5G mobile communication standards defined by 3^{rd} generation partnership project (3GPP) that is a mobile communication standard organization group may be main targets. Main features of the disclosure are applicable to other communication systems with similar technical backgrounds, with a slight change within a range that does not deviate from the scope of the disclosure, and such applicability may be determined by one or ordinary skill in the art.

In the 5G system, a network data collection and analysis function (NWDAF) may be defined to support network automation, the NWDAF referring to a network function for providing a function to analyze and provide data collected over a 5G network. The NWDAF may collect/store/analyze information from the 5G network and may provide a result to an unspecified network function (NF), and an analysis result may be independently used by each NF.

For convenience of descriptions, the disclosure uses some of terms and names defined in the 3^{rd} Generation Partnership Project (3GPP) long term evolution (LTE) standards (standards of 5G, NR, LTE, or similar system). However, the disclosure is not limited to these terms and names, and may be equally applied to communication systems conforming to other standards.

The disclosure relates to, when data transmission/reception is directly performed between a user equipment (UE) and a UE by using a sidelink relay UE or data transmission/reception is performed between a UE and a base station (BS) in a wireless communication system, a method and apparatus in which a UE determines a priority of a sidelink relay discovery message and determines a transmission priority or a reception priority of at least one of a general sidelink message and a Uu message.

In detail, the disclosure provides a method in which a sidelink relay UE or a sidelink remote UE determines a priority of a sidelink relay discovery message and determines and handles a transmission priority or a reception priority. A UE may determine a priority of a logical channel corresponding to a sidelink relay discovery message and a logical channel corresponding to a general sidelink message (at least one of PC5-S signaling, a PC5-RRC message, and PC5 MAC CE).

When it is determined that a sidelink relay discovery message and a Uu message may not be simultaneously transmitted, a UE may determine a message to be preferentially transmitted from among the sidelink relay discovery message and the Uu message. When it is determined that a general sidelink message and a Uu message may not be simultaneously transmitted, a UE may determine a message to be preferentially transmitted from among the general sidelink message and the Uu message. When it is determined that a sidelink relay discovery message, a general sidelink message, and a Uu message may not be simultaneously transmitted, a UE may determine a message to be preferentially transmitted from among the sidelink relay discovery message, the general sidelink message, and the Uu message.

When it is determined that a sidelink relay discovery message and a Uu message may not be simultaneously received, a UE may determine a message to be preferentially received from among the sidelink relay discovery message and the Uu message. When it is determined that a general sidelink message and a Uu message may not be simultaneously received, a UE may determine a message to be preferentially received from among the general sidelink message and the Uu message. When it is determined that a sidelink relay discovery message, a general sidelink message, and a Uu message may not be simultaneously received, a UE may determine a message to be preferentially received from among the sidelink relay discovery message, the general sidelink message and the Uu message.

When it is determined that transmission of a sidelink relay discovery message and reception of a Uu message may not be simultaneously performed, a UE may determine a message to be prioritized (transmitted or received) from among the sidelink relay discovery message and the Uu message. When it is determined that reception of a sidelink relay discovery message and transmission of a Uu message may not be simultaneously performed, a UE may determine a message to be prioritized (received or transmitted) from among the sidelink relay discovery message and the Uu message.

According to an embodiment of the disclosure, when a UE determines priorities of a sidelink relay discovery message, a general sidelink message (at least one of PC5-S signaling, a PC5-RRC message, and PC5 MAC CE), and a Uu message, the UE may determine a priority of a logical channel corresponding to the sidelink relay discovery message, a priority of a logical channel corresponding to the general sidelink message, a priority of PC5 MAC UE, and a priority of a logical channel corresponding to the Uu message.

According to an embodiment of the disclosure, a priority of a sidelink relay discovery message, a priority of a general sidelink message, and a priority of a Uu message may be configured by a BS in a UE. According to an embodiment, a UE may obtain a priority of a sidelink relay discovery message or a priority of a general sidelink message as a pre-configured value.

According to an embodiment of the disclosure, when a UE determines priorities of a sidelink relay discovery message, a general sidelink message, and a Uu message, the UE may determine priorities of a transport block (TB) including the sidelink relay discovery message, a TB including the general sidelink message, and a TB including the Uu message. According to an embodiment of the disclosure, when a UE determines priorities of a sidelink relay discovery message, a general sidelink message, and a Uu message, the UE may determine priorities of signaling required to transmit and receive the sidelink relay discovery message (e.g., scheduling request and SL-BSR), signaling required to transmit and receive the general sidelink message (e.g., scheduling request, SL-BSR, HARQ ACK/NAK related PUCCH, HARQ ACK/NAK related PUSCH, and HARQ ACK/NAK related PSFCH), and signaling required to transmit and receive the Uu message (e.g., scheduling request, BSR, HARQ ACK/NAK related PUCCH, and HARQ ACK/NAK related PUSCH).

According to an embodiment of the disclosure, information of a priority of a sidelink relay discovery message, a priority of a general sidelink message, or a priority of a Uu message may be used in various cases. The various cases may include at least one of, for example, a case where a UE determines a sidelink logical channel priority, determines whether to include the sidelink logical channel priority in a medium access control protocol data unit (MAC PDU), and configures the MAC PDU, a case where a UE determines a sidelink logical channel priority and determines a sidelink logical channel to use an allocated sidelink transmission resource, a case where a UE may not simultaneously transmit a sidelink relay discovery message, a general sidelink message, and a Uu message due to hardware limitations or power limitations and determines that a message to be preferentially transmitted should be selected, a case where a UE may not simultaneously perform sidelink relay discovery message reception and Uu message transmission due to hardware limitations or power limitations and determines that a message should be preferentially selected, or a case where a UE may not simultaneously perform sidelink relay discovery message transmission and Uu message reception due to hardware limitations or power limitations and determines that a message to be prioritized should be selected.

When a UE handles transmission or reception priorities of a sidelink relay discovery message, a general sidelink message, and a U message, the UE may determine transmission or reception priorities of signaling related to transmission or reception of the sidelink relay discovery message (e.g., scheduling request, SL-BSR, HARQ ACK/NAK related PSFCH, HARQ ACK/NAK related PUCCH, and HARQ ACK/NAK related PUSCH), the general sidelink message, and the Uu message, and may handle transmission or reception of a message or signaling determined to have a high priority. When a UE handles transmission or reception priorities of a sidelink relay discovery message, a general sidelink message, and a Uu message, the UE may determine transmission or reception priorities of signaling related to transmission or reception of the general sidelink message (e.g., scheduling request, SL-BSR, HARQ ACK/NAK related PSFCH, HARQ ACK/NAK related PUCCH, and HARQ ACK/NAK related PUSCH), the sidelink relay discovery message, and the Uu message, and may handle transmission or reception of a message or signaling determined to have a high priority. When a UE handles transmission or reception priorities of a sidelink relay discovery message, a general sidelink message, and a Uu message, the UE may determine transmission or reception priorities of signaling related to transmission or reception of the Uu message (e.g., scheduling request, BSR, HARQ ACK/NAK related PUCCH, and HARQ ACK/NAK related PUSCH), the sidelink relay discovery message, and the general sidelink message, and may handle transmission or reception of a message or signaling determined to have a high priority. A UE may determine transmission or reception priorities of at least some of signaling related to transmission or reception of a sidelink relay discovery message (e.g., scheduling request, SL-BSR, HARQ ACK/NAK related PSFCH, HARQ ACK/NAK related PUCCH, and HARQ ACK/NAK related PUSCH), signaling related to transmission or reception of a general sidelink message (e.g., scheduling request, SL-BSR, HARQ ACK/NAK related PSFCH, HARQ ACK/NAK related PUCCH, and HARQ ACK/NAK related PUSCH), and signaling related to transmission or reception of a Uu message (e.g., scheduling request, BSR, HARQ ACK/NAK related PUCCH, and HARQ ACK/NAK related PUSCH), and may handle transmission or reception of signaling determined to have a high priority.

In the description below, the term indicating a signal, the term indicating a channel, the term indicating control information, the term indicating a network entity, the term indicating a component of an apparatus, and the like are exemplified for convenience of explanation. Accordingly, the disclosure is not limited to the terms, and other terms indicating objects having equal technical meanings may be used.

Hereinafter, a BS is an entity that allocates resources to a UE and may be at least one of a gNode B, an eNode B, a node B, a base station (BS), a radio access unit, a base station controller, or a node on a network. A UE may include a user equipment (UE), a mobile station (MS), a cellular phone, a smartphone, a computer, or a multimedia system capable of performing a communication function. However, these are only examples, and the BS and the UE are not limited to the above examples. In the disclosure, an evolved node B (eNB) may be interchangeably used with a next-generation node B (gNB) for convenience of explanation. That is, a BS described as an eNB may represent a gNB. In the disclosure, the term "UE" may refer to not only mobile phones, narrowband Internet of Things (NB-loT) devices, and sensors but also various wireless communication devices.

In the following description, a physical channel and a signal may be interchangeably used with data or a control signal. For example, a physical downlink shared channel (PDSCH) is a term indicating a physical channel through which data is transmitted, but the PDSCH may also be used to indicate data. That is, in the disclosure, when a 'physical channel is transmitted', it may be interpreted as 'data or a signal is transmitted through a physical channel'.

Hereinafter, in the disclosure, higher layer signaling refers to a method of transmitting a signal from a BS to a UE by using a downlink data channel of a physical layer or transmitting a signal from a UE to a BS by using an uplink data channel of a physical layer. Higher layer signaling may be radio resource control (RRC) signaling or media access control (MAC) control element (CE).

Also, in the disclosure, the expression such as "greater than" or "less than" is used to determine whether a particular condition is satisfied or fulfilled, but this is only an example and the expression may not exclude the description of "equal to or greater than" or "equal to or less than". A condition written with "equal to or greater than" may be replaced with "greater than", a condition with "equal to or less than" may be replaced with "less than", and a condition with "equal to or greater than... and less than..." may be replaced with "greater than... and equal to or less than...".

Also, in the disclosure, embodiments will now be described by using terms and names defined in some communication standards (e.g., the 3GPP), but the disclosure is not limited to the terms and names. Embodiments of the disclosure may be easily modified and applied to other communication systems.

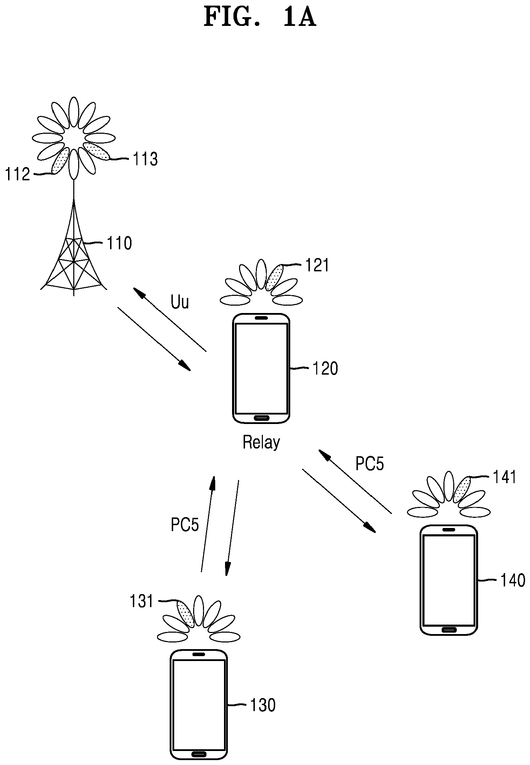

FIG. 1A is a diagram illustrating a wireless communication system, according to an embodiment of the disclosure.

FIG. 1A illustrates a BS 110, UEs 130 and 140, and a sidelink relay 120 capable of relaying data transmission/reception between a BS and a UE, as parts of nodes using a wireless channel in a wireless communication system. In this case, the sidelink relay corresponds to a UE-to-network (U2N) relay. Although FIG. 1A illustrates only one BS, another BS that is the same as or similar to the BS 110 may be further present.

The BS 110 refers to a network infrastructure providing a radio access to the UEs 130 and 140 and the relay 120. The BS 110 has coverage defined as a preset geographical region based on a range for transmitting a signal. The BS 110 may also be referred to as, in addition to the BS, an "access point (AP)", an "eNodeB (eNB)", a "5^{th} generation node (5G) node", a "next generation nodeB (gNB)", a "wireless point", a "transmission/reception point (TRP)", or another term having an equivalent technical meaning.

The relay 120 may be an apparatus used by a user or a network infrastructure and may communicate with the BS 110 through a wireless channel. A link from the BS 110 to the relay 120 may be referred to as a downlink (DL), and a link from the relay 120 to the BS 110 may be referred to as an uplink (UL). The BS 110 and the relay 120 may be connected to each other through a Uu interface. The UL refers to a radio link through which the relay 120 transmits data or a control signal to the BS 110, and the DL refers to a radio link through which the BS 110 transmits data or a control signal to the relay 120.

The relay 120 may communicate with a first UE 130 and a second UE 140 through a wireless channel. In this regard, a link between the relay 120 and the first UE 130 and a link between the relay 120 and the second UE 140 may each be referred to as a sidelink, and the sidelink may also be referred to as a PC5 interface.

Each of the UEs 130 and 140 may be an apparatus used by a user, and may communicate with the BS 110 through a wireless channel or may communicate with a network through a wireless channel with the relay 120 through a wireless channel. In the disclosure, a case where each of the first UE 130 and the second UE 140 performs communicate through the wireless channel with the relay 120 may be considered. At least one of the first UE 130 and the second UE 140 may operate without a user's involvement. That is, at least one of the first UE 130 and the second UE 140 may be an apparatus performing machine type communication (MTC) and may not be carried by a user. Each of the first UE 130 and the second UE 140 may be referred to as, in addition to a terminal, a "UE", an "MS", a "subscriber station", a "remote terminal", a "wireless terminal", a "user device", or another term having an equivalent technical meaning.

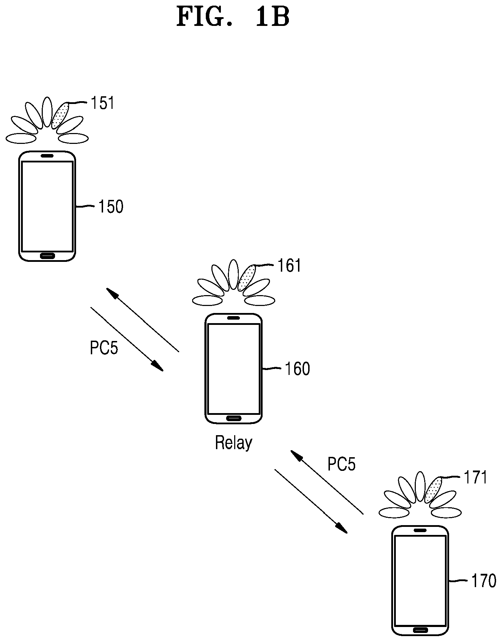

FIG. 1B is a diagram illustrating a wireless communication system, according to another embodiment of the disclosure.

FIG. 1B illustrates a wireless communication system including UEs 150 and 170, and a sidelink relay 160 capable of relaying data transmission/reception between UEs, as parts of nodes using a wireless channel in the wireless communication system. In this case, the sidelink relay 160 corresponds to a UE-to-UE (U2U) relay.

The relay 160 may communicate with a third UE 150 and a fourth UE 170 through a wireless channel. In this regard, a link between the relay 160 and the third UE 150 and a link between the relay 160 and the fourth UE 170 may each be referred to as a sidelink, and the sidelink may also be referred to as a PC5 interface.

Each of the third UE 150 and the fourth UE 170 is an apparatus used by a user, and may directly communicate with each other through a wireless channel or may communicate with a counterpart UE through a wireless channel with the relay 160. In this regard, a link between the third UE 150 and the fourth UE 170 and a link between the third UE 150 and the relay 160, and a link between the fourth UE 170 and the relay 160 may each be referred to as a sidelink, and the sidelink may be referred to as a PC5 interface.

At least one of the third UE 150 and the fourth UE 170 may operate without a user's involvement. That is, at least one of the third UE 150 and the fourth UE 170 may be an apparatus performing MTC and may not be carried by a user. Each of the third UE 150 and the fourth UE 170 may be referred to as, in addition to a terminal, a "UE", a "mobile station", a "subscriber station", a "remote terminal", a "wireless terminal", a "user device", or another term having an equivalent technical meaning.

In the following descriptions, a UL or a DL, a Uu interface, a sidelink, and PC5 may be interchangeably used.

The BS 110, the relays 120 and 160, and the UEs 130, 140, 150, and 170, shown in FIGS. 1A and 1B, may transmit and receive wireless signals in millimeter wave (mmWave) bands (e.g., 28 GHz, 30 GHz, 38 GHz, and 60 GHz). In this regard, in order to improve a channel gain, the BS 110, the relays 120 and 160, and the UEs 130, 140, 150, and 170 may perform beamforming. In this case, the beamforming may include transmission beamforming and reception beamforming. That is, the BS 110, the relays 120 and 160, and the UEs 130, 140, 150, and 170 may assign directivity to a transmission signal or a reception signal. To this end, the BS 110, the relays 120 and 160, and the UEs 130, 140, 150, and 170 may select serving beams 112, 113, 121, 131, 141, 151, 161, and 171 through a beam search or beam management procedure. After the serving beams 112, 113, 121, 131, 141, 151, 161, and 171 are selected, communication may be performed on a resource having a quasi-co-located (QCL) relationship with a resource that transmitted the serving beams 112, 113, 121, 131, 141, 151, 161, and 171.

It may be evaluated that a first antenna port and a second antenna port are in a QCL relationship when large-scale characteristics of a channel through which a symbol on the first antenna port is transmitted are able to be inferred from a channel through which a symbol on the second antenna port is transmitted. For example, the large-scale characteristics may include at least one of a delay spread, a Doppler spread, a Doppler shift, an average gain, an average delay, or a spatial receiver parameter.

The first UE 130, the second UE 140, the third UE 150, and the fourth UE 170, shown in FIGS. 1A and 1B, may support vehicle communication. In the case of vehicle communication, in an LTE system, standardization for vehicle-to-everything (V2X) technology based on a device-to-device (D2D) structure has been completed in the 3GPP Releases 14 and 15, and standardization for V2X technology based on 5G NR has been completed in the 3GPP Release 16. In NR V2X, unicast communication, groupcast (or multicast) communication, and broadcast communication between UEs may be supported. Also, unlike LTE V2X aimed for transmission/reception of basic safety information for driving of vehicles on roads, the NR V2X aims to provide further advanced services such as platooning, advanced driving, extended sensor, remote driving, and the like. A V2X service may be divided into a basic safety service and an advanced service. The basic safety service may include detailed services such as a cooperative awareness message (CAM) or basic safety message (BSM) service, a left-turn notification service, a vehicle forward collision warning service, an emergency vehicle approach notification service, a front obstacle warning service, an intersection signal information service, and the like. Also, in the basic safety service, V2X information may be transmitted and received by using a broadcast, unicast, or groupcast transmission method. In the advanced service, quality of service (QoS) requirements may be strengthened than in the basic safety service. In the advanced service, there may be a need for a method of transmitting and receiving V2X information by using the unicast and groupcast transmission methods, other than the broadcast transmission method, so that V2X information is transmitted and received within a particular vehicle group or V2X information is transmitted and received between two vehicles. The advanced service may include detailed services such as a platooning service, an autonomous driving service, a remote driving service, an extended sensor-based V2X service, and the like. Also, the NR V2X may provide a public safety service by supporting a direct communication service between UEs in an area where there is no network infrastructure.

Hereinafter, a sidelink (SL) refers to a transmission/reception path for a signal between UEs or a transmission/reception path for a signal between a UE and a relay, and the sidelink may be interchangeably used with a PC5 interface. Hereinafter, a BS refers to an entity for allocating a resource to a UE, and a relay and may be a BS supporting both V2X communication and general cellular communication, or a BS supporting only V2X communication. That is, the BS may refer to an NR BS (e.g., a gNB), an LTE BS (e.g., an eNB), or a road site unit (RSU). A UE (terminal) may include all of
a general UE, a mobile station, a vehicle supporting vehicle-to-vehicle (V2V) communication, a vehicle or a pedestrian's handset (e.g., a smartphone) supporting a vehicle-to-pedestrian (V2P) communication, a vehicle supporting vehicle-to-network (V2N) communication, a vehicle supporting vehicle-to-infrastructure (V2I) communication, an RSU having embedded therein UE functions, an RSU having embedded therein BS functions, or an RSU having embedded therein some BS functions and some UE functions.

Meanwhile, in the disclosure, the UE may refer to the vehicle supporting V2V communication, the vehicle or the pedestrian's handset (e.g., a smartphone) supporting V2P communication, the vehicle supporting V2N communication, or the vehicle supporting V2I communication. The UE may refer to a user device supporting communication between devices of a public safety net.

Also, in the disclosure, the UE may refer to road side unit (RSU) having embedded therein UE functions, the RSU having embedded therein BS functions, or the RSU having embedded therein some BS functions and some UE functions.

In the disclosure, a relay may refer to a vehicle supporting V2X communication or a user device supporting communication between devices of a public safety net. In addition, in the disclosure, the relay may refer to an apparatus having embedded therein UE functions, an apparatus having embedded therein BS functions, or an apparatus having embedded therein some UE functions or some BS functions.

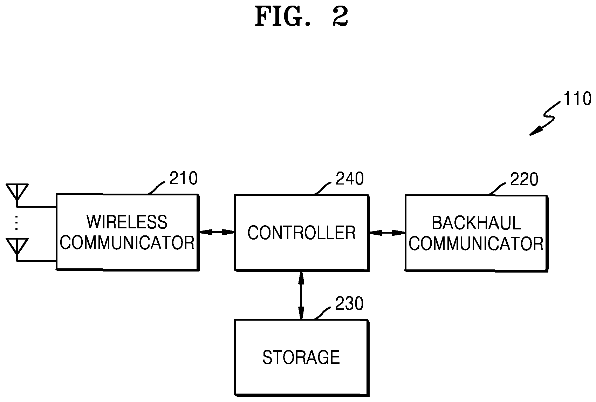

FIG. 2 is a block diagram illustrating a configuration of a BS in a wireless communication system, according to an embodiment of the disclosure.

The configuration shown in FIG. 2 may be understood as a configuration of the BS 110. The term "... unit" or "...er/or" used herein indicates a unit, which processes at least one function or operation, and may be implemented by hardware or software, or by a combination of hardware and software.

Referring to FIG. 2, the BS 110 may include a wireless communicator 210, a backhaul communicator 220, a storage 230, and a controller 240. However, components of the BS 110 are not limited to the above example. For example, the BS may include more components than those described above or may include fewer components than those described above. In addition, the wireless communicator 210, the backhaul communicator 220, the storage 230, and the controller 240 may be implemented in a single chip. Also, the controller 240 may include one or more processors.

The wireless communicator 210 may perform functions for transmitting and receiving a signal via a wireless channel. For example, the wireless communicator 210 may perform conversion between a baseband signal and a bit string based on physical layer specifications of a system. For example, for data transmission, the wireless communicator 210 may generate complex symbols by encoding and modulating a transmission bit string. For data reception, the wireless communicator 210 may reconstruct a reception bit string by demodulating and decoding a baseband signal.

Also, the wireless communicator 210 may up-convert a baseband signal into a radio frequency (RF) band signal and then may transmit the RF band signal via an antenna, and may down-convert an RF band signal received via the antenna, into a baseband signal. To this end, the wireless communicator 210 may include a transmission filter, a reception filter, an amplifier, a mixer, an oscillator, a digital-to-analog converter (DAC), an analog-to-digital converter (ADC), or the like. Also, the wireless communicator 210 may include a plurality of transmission/reception paths. Furthermore, the wireless communicator 210 may include at least one antenna array including a plurality of antenna elements.

In terms of hardware, the wireless communicator 210 include a digital unit and an analog unit, and the analog unit may include a plurality of sub-units depending on operating power, an operating frequency, or the like. The digital unit may include at least one processor (e.g., a digital signal processor (DSP)).

The wireless communicator 210 may transmit and receive signals as described above. Accordingly, all or part of the wireless communicator 210 may be called a transmitter, a receiver, or a transceiver. Also, in the descriptions below, transmission and reception performed via a wireless channel indicate that the above processing is performed by the wireless communicator 210.

The backhaul communicator 220 may provide an interface for communicating with other nodes in the network. That is, the backhaul communicator 220 may convert a bit string into a physical signal, the bit string being transmitted from the BS to another node, e.g., another access node, another BS 110, an upper node, or a core network, and may convert a physical signal into a bit string, the physical signal being received from another node.

The storage 230 may store data for operations of the BS 110, such as basic programs, application programs, and configuration information. The storage 230 may include a volatile memory, a non-volatile memory, or a combination of a volatile memory and a non-volatile memory. Also, the storage 230 may provide the stored data upon a request of the controller 240.

The controller 240 may control overall operations of the BS 110. For example, the controller 240 may transmit and receive a signal via the wireless communicator 210 or via the backhaul communicator 220. Also, the controller 240 records and reads data to and from the storage 230. The controller 240 may perform functions of a protocol stack required by the communication standards. According to another embodiment, the protocol stack may be included in the wireless communicator 210. In this regard, the controller 240 may include at least one processor. According to embodiments, the controller 240 may control the BS 110 to perform operations according to embodiments described below.

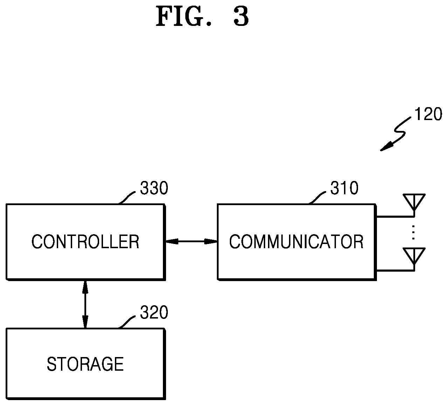

FIG. 3 is a block diagram illustrating a configuration of a UE in a wireless communication system, according to an embodiment of the disclosure.

The configuration illustrated in FIG. 3 may be understood as a configuration of the UE 120. The term such as "... unit" or "...er/or" used herein indicates a unit, which processes at least one function or operation, and may be implemented by hardware or software, or by a combination of hardware and software.

Referring to FIG. 3, the UE 120 may include a communicator 310, a storage 320, and a controller 330. Components of the UE 120 are not, however, limited thereto. For example, the UE 120 may include more or fewer elements than those described above. In addition, the communicator 310, the storage 320, and the controller 330 may be implemented in a single chip. Also, the controller 330 may include one or more processors.

The communicator 310 performs functions for transmitting and receiving a signal through a wireless channel. For example, the communicator 310 may perform conversion between a baseband signal and a bit string based on physical layer specifications of a system. For example, for data transmission, the communicator 310 generates complex symbols by encoding and modulating a transmission bit string. Also, for data reception, the communicator 310 may reconstruct a reception bit string by demodulating and decoding a baseband signal. Also, the communicator 310 may up-convert a baseband signal into an RF band signal and then transmit the RF signal via an antenna, and may down-convert an RF band signal received via the antenna into a baseband signal. For example, the communicator 310 may include a transmission filter, a reception filter, an amplifier, a mixer, an oscillator, a DAC, an ADC, or the like.

Also, the communicator 310 may include a plurality of transmission/reception paths. Furthermore, the communicator 310 may include at least one antenna array including a plurality of antenna elements. In terms of hardware, the communicator 310 may include a digital circuit and an analog circuit (e.g., a radio frequency integrated circuit (RFIC)). The digital circuit and the analog circuit may be implemented in one package. Also, the communicator 310 may include a plurality of RF chains. Furthermore, the communicator 310 may perform beamforming.

The communicator 310 may transmit and receive signals as described above. Accordingly, all or parts of the communicator 310 may be referred to as a 'transmitter', a 'receiver', or a 'transceiver'. Also, in the descriptions below, transmission and reception performed via a wireless channel may indicate that the above processing is performed by the communicator 310.

The storage 320 may store data for operations of the UE 120, such as basic programs, application programs, and configuration information. The storage 320 may include a volatile memory, a non-volatile memory, or a combination of a volatile memory and a non-volatile memory. Furthermore, the storage 320 provides stored data, upon a request of the controller 330.

The controller 330 controls overall operations of the UE 120. For example, the controller 330 may transmit and receive a signal via the communicator 310. Also, the controller 330 records and reads data to and from the storage 320. Also, the controller 330 may perform functions of a protocol stack required by the communication standards. To this end, the controller 330 may include at least one processor or microprocessor or may be a part of a processor. A part of the communicator 310 and the controller 330 may be referred to as a communication processor (CP). According to embodiments, the controller 330 may control the UE 120 to perform operations according to embodiments described below.

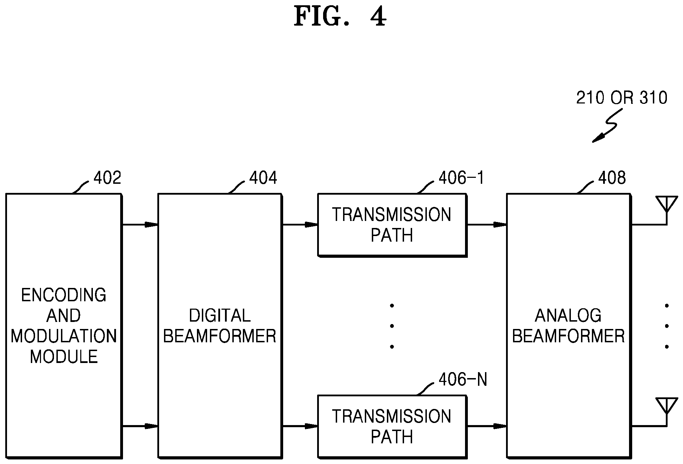

FIG. 4 is a block diagram illustrating a configuration of a communicator in a wireless communication system, according to an embodiment of the disclosure.

FIG. 4 illustrates an example of a detailed configuration of the wireless communicator 210 of FIG. 2 or the communicator 310 of FIG. 3. In detail, as part of the wireless communicator 210 of FIG. 2 or the communicator 310 of FIG. 3, FIG. 4 illustrates elements for performing beamforming.

Referring to FIG. 4, the wireless communicator 210 or the communicator 310 may include an encoding and modulation module 402, a digital beamformer 404, a plurality of transmission paths 406-1 to 406-N, and an analog beamformer 408.

The encoding and modulation module 402 may perform channel encoding. For the channel encoding, at least one of a low density parity check (LDPC) code, a convolution code, and a polar code may be used. The encoding and modulation module 402 generates modulated symbols by performing constellation mapping.

The digital beamformer 404 may perform beamforming on a digital signal (e.g., the modulated symbols). To this end, the digital beamformer 404 may multiply the modulated symbols by beamforming weights. Here, the beamforming weights are used to change a size and phase of a signal, and may be referred to as a precoding matrix or a precoder. The digital beamformer 404 may output modulated symbols that are digitally-beamformed to the plurality of transmission paths 406-1 to 406-N. Here, according to a multiple input multiple output (MIMO) transmission technique, the modulated symbols may be multiplexed or the same modulated symbols may be provided to the plurality of transmission paths 406-1 to 406-N.

The plurality of transmission paths 406-1 to 406-N may convert the digitally-beamformed digital signals into analog signals. To this end, each of the plurality of transmission paths 406-1 to 406-N may include an inverse fast Fourier transform (IFFT) operator, a cyclic prefix (CP) inserter, a DAC, and an up-converter. The CP inserter is for orthogonal frequency division multiplexing (OFDM) and may be excluded when another physical layer method (e.g., a filter bank multi-carrier (FBMC)) is applied. That is, the plurality of transmission paths 406-1 to 406-N may provide independent signal processing processes to a plurality of streams generated through digital beamforming. However, depending on implementation methods, some elements of the plurality of transmission paths 406-1 to 406-N may be commonly used.

The analog beamformer 408 may perform beamforming on the analog signals. To this end, the digital beamformer 404 may multiply the analog signals by beamforming weights. Here, the beamforming weights are used to change a size and phase of a signal. In detail, the analog beamformer 440 may be configured in various ways, based on connection structures between the plurality of transmission paths 406-1 to 406-N and antennas. For example, each of the plurality of transmission paths 406-1 to 406-N may be connected to one antenna array. In another example, each of the plurality of transmission paths 406-1 to 406-N may be connected to one antenna array. In another example, the plurality of transmission paths 406-1 to 406-N may be adaptively connected to one antenna array or at least two antenna arrays.

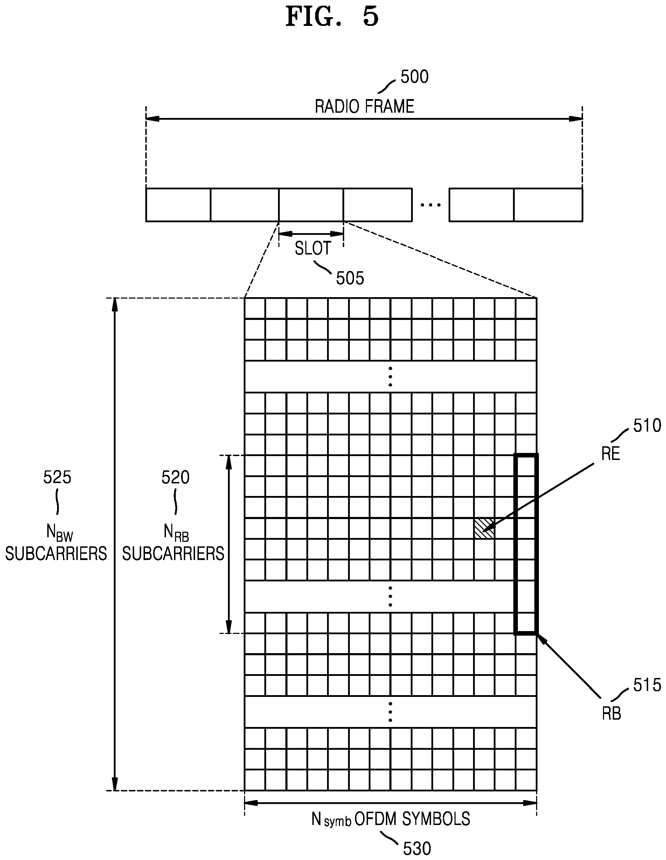

FIG. 5 is a block diagram illustrating a structure of a time-frequency resource of a wireless communication system, according to an embodiment of the disclosure.

Referring to FIG. 5, in a radio resource domain, a horizontal axis represents a time domain and a vertical axis represents a frequency domain. A minimum transmission unit in the time domain is an OFDM symbol or a discrete Fourier transform spread OFDM (DFT-S-OFDM) symbol, and N_{symb} OFDM symbols (or DFT-S-OFDM symbols) 530 may be included in one slot 505. Unlike a slot, in an NR system, a length of a subframe may be defined as 1.0 ms and a length of a radio frame 500 may be defined as 10 ms. A minimum transmission unit in the frequency domain is a subcarrier, and a bandwidth of an entire system transmission band may include a total of N_{BW} subcarriers 525. Specific numerical values such as N_{symb} and N_{BW} may vary according to a system.

A basic unit in a time-frequency resource domain is a resource element (RE) 510, and the RE 510 may be represented by an OFDM symbol index or by a DFT-S-OFDM symbol index and a subcarrier index. A resource block (RB) 515 may be defined as N_{RB} consecutive subcarriers 520 in the frequency domain. In general, a minimum transmission unit of data is an RB unit, and in the NR system, it may generally be N_{symb} = 14 and N_{RB} = 12.

The structure of the time-frequency resource as shown in FIG. 5 may be applied to a Uu interface. Also, the structure of the time-frequency resource as shown in FIG. 5 may be similarly applied to a sidelink.

A sidelink relay may be authenticated to be used in at least one of a particular service, a particular UE, a particular sidelink flow, a particular sidelink bearer, a particular unicast link, a particular source identifier, and a particular destination identifier. The sidelink relay may establish direct connection with an authenticated UE at a time point when the sidelink relay is installed. In an embodiment, the sidelink relay may transmit a sidelink relay discovery message and perform a sidelink direct connection establishment procedure with the authenticated UE. In an embodiment, the sidelink relay may also receive a sidelink relay discovery message from the authenticated UE, transmit the sidelink relay discovery message to the authenticated UE, and perform a sidelink direct connection establishment procedure with the corresponding UE. In various embodiments, the sidelink relay discovery message may be understood as a message transmitted to and from each other to initiate a sidelink relay discovery procedure between a sidelink relay and a UE, and may include a message for discovery or a message for requesting discovery. Configuration information necessary for a sidelink relay UE and a sidelink remote UE to transmit or receive the sidelink relay discovery message may be obtained from a BS or may be pre-configured.

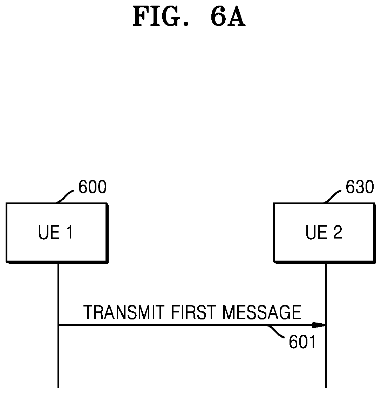

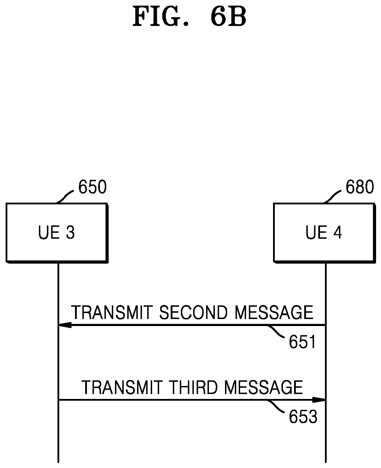

Next, a sidelink relay discovery procedure is described with reference to FIGS. 6A and 6B. The sidelink relay discovery procedure of FIGS. 6A and 6B may be applied to a UE-to-network (UE2NW) relay discovery procedure or a UE-to-UE (UE2UE) relay discovery procedure.

FIG. 6A is a diagram for describing a sidelink relay discovery procedure, according to an embodiment of the disclosure.

Referring to FIG. 6A, a UE 1 600 indicates a relay UE that functions as a sidelink relay, and a UE 2 630 indicates a remote UE that performs data transmission/reception to/from a BS or another UE with support from the sidelink relay. The UE 1 600 may obtain authentication information or service information necessary for relay functions. The authentication information or the service information necessary for relay functions may be obtained through a core network or by using an operations, administration management (OAM) method. In operation 601, the UE 1 600 may transmit a sidelink relay discovery message, e.g., a first message. According to the embodiment of FIG. 6A, the sidelink relay discovery message (first message) transmitted by the UE 1 600 may include, e.g., a discovery message. In various embodiments of the disclosure, the first message may include information indicating the presence of a sidelink relay or information about a service message that may be relayed. The UE 1 600 may obtain configuration information necessary for transmission of the sidelink relay discovery message. The configuration information necessary for transmission of the sidelink relay discovery message may include at least one of a transmission resource configuration (e.g., a frequency, a bandwidth part (BWP), and a resource pool), a configuration (e.g., a parameter applied when the BS schedules a resource or when the UE 1 directly selects a resource) necessary for selecting a transmission resource, power control, a transmission parameter, a retransmission parameter, modulation and coding scheme (MCS) information for transmission of the sidelink relay discovery message, a target service, a target group, a target destination, a target PC5 5G QoS identifier (5QI) (PQI) list, and a target QoS parameter set list of the sidelink relay discovery message. In an embodiment of the disclosure, the sidelink relay discovery message may be configured to be periodically transmitted. In an embodiment of the disclosure, the sidelink relay discovery message may be configured to be transmitted in a one-shot manner when a condition configured in the UE 1 600 is satisfied, or may be configured to be transmitted according to a certain cycle. The relay discovery message may also be aperiodically transmitted.

FIG. 6B is a diagram for describing a sidelink relay discovery procedure, according to another embodiment of the disclosure.

A UE 3 650 indicates a relay UE that functions as a sidelink relay, and a UE 4 680 indicates a remote UE that performs data transmission/reception to/from the BS or another UE with support from the sidelink relay.

As the relay UE, the UE 3 650 may obtain authentication information or service information necessary for performing sidelink relay-based communication. The authentication information or the service information may be obtained through a core network or by using an OAM method. As the remote UE, the UE 4 680 may obtain authentication information or service information necessary for performing sidelink relay-based communication. The authentication information or the service information may be obtained through a core network or by using an OAM method.

In operation 651, the UE 4 680 may transmit a sidelink relay discovery message, e.g., a second message. The sidelink relay discovery message (second message) transmitted by the UE 4 680 in operation 651 may include a discovery solicitation message. When it is determined that a condition for transmission of the second message is satisfied, the UE 4 680 may configure the second message and transmit the second message in operation 651. In various embodiments, the second message may be transmitted for the purpose of discovering a relay UE capable of relaying a service message desired by the remote UE.

When it is determined that the second message is received from the UE 4 680, the UE 3 650 may process the received second message. The UE 3 650 may transmit a sidelink relay discovery message, e.g., a third message, in response to the second message. The sidelink relay discovery message (third message) may include a discovery message. In various embodiments, the third message may be used for the purpose of notifying the presence of the relay UE capable of relaying the service message desired by the remote UE when the relay UE receives the second message from the remote UE. In an embodiment, when a condition for transmission of the third message is satisfied, the UE 3 650 may configure the third message and transmit the third message to the UE 4 680 in operation 653. When the third message transmitted from the UE 3 650 is received, the UE 4 680 may process the third message.

The UE 3 650 and the UE 4 680 may obtain configuration information necessary for transmission/reception of sidelink relay discovery messages, e.g., configuration information necessary for transmission/reception of the first message, the second message, or the third message. The configuration information necessary for reception of the sidelink relay discovery message may include at least one of a reception resource configuration (e.g., a frequency, a BWP, and a resource pool), a target service of the sidelink relay discovery message, a target group, a target destination, a target PQI list, a target QoS parameter set list, a monitoring condition configuration for the sidelink relay discovery message, and configuration information about a time interval for receiving the sidelink relay discovery message. The configuration information necessary for transmission of the sidelink relay discovery message may include at least one of a transmission resource configuration (e.g., a frequency, a BWP, and a resource pool), a configuration (e.g., a parameter applied when the BS schedules a resource or when the UE 3 or the UE 4 directly selects a resource) necessary for selecting a transmission resource, power control, a transmission parameter, a retransmission parameter, MCS information for transmission of the sidelink relay discovery message, a target service, a target group, a target destination, a PQI list, and a target QoS parameter set list of the sidelink relay discovery message.

In an embodiment of the disclosure, the sidelink relay discovery message may be configured to be periodically transmitted. In an embodiment of the disclosure, the sidelink relay discovery message may be configured to be transmitted in a one-shot manner when a condition configured in the UE 3 650 and the UE 4 680 is satisfied, or may be configured to be transmitted according to a certain cycle.

According to an embodiment of the disclosure, the relay discovery message (the first message, the second message, or the third message) used by the relay UE and the remote UE in the sidelink relay discovery procedure in FIGS. 6A and 6B may be configured as follows. The relay discovery message may include at least one of pieces of listed information with reference to [Table 1] below.

**[Table 1]**

| |
|---|
| (Information that may be included in the first message or the third message) |
| - the services that Relay UE can relay. (service ID, SL flow ID, SRC ID, DST ID, unicast link ID, PQI, SLRB ID, cast type) |
| - the groups that Relay UE belongs to |
| - the possible DNNs/S-NSSAIs for the service relayed by Relay UE |
| - the serving PLMN for Relay UE |
| - the relay UE pre-configured in the remote UE |
| - QoS parameter set of the service that Relay can support |
| |
| (Information that may be included in the second message) |
| - the service that remote UE request to relay (service ID, SL flow ID, SRC ID, DST ID, unicast link ID, PQI, SLRB ID, group ID, cast type) |
| - QoS parameter set of the service that remote UE request to relay |
| - the serving PLMN for remote UE |
| - the groups that Remote UE belongs to |

In an embodiment, the second message may include information (e.g., a frequency, a BWP, and a resource pool) about a resource pool in which the remote UE may receive the third message of the relay UE.

In an embodiment of the disclosure, the first message or the third message may include configuration information (e.g., a relay discovery condition) for the remote UE to perform sidelink relay UE discovery, and configuration information (e.g., a relay selection condition) for the remote UE to perform sidelink relay UE discovery and select a relay UE.

In an embodiment of the disclosure, the first message or the third message may include at least one of configuration information and resource information (e.g., a frequency, a BWP, and a resource pool) used by the remote UE to transmit a message for requesting establishment of direct connection with the sidelink relay UE.

When a UE (sidelink relay UE or sidelink remote UE) is authenticated to transmit a sidelink relay discovery message or is authenticated to receive a sidelink relay discovery message, the UE may determine a priority of transmission or reception of the sidelink relay discovery message. The UE may obtain configuration information from a BS or may use pre-configured information for priority information for transmission or reception of the sidelink relay discovery message. For example, the UE may obtain priority information of a logical channel corresponding to the sidelink relay discovery message from configuration information of the BS or pre-configured information. The priority information for the sidelink relay discovery message may be used as a criterion for determining a message to be preferentially transmitted when the UE determines that it is difficult to simultaneously transmit the sidelink relay discovery message, a general sidelink message, and a Uu message, due to hardware limitations or power limitations.

In various embodiments, when the UE determines to transmit or receive a sidelink relay discovery message or signaling related to the sidelink relay discovery message, the UE may determine whether it is possible to simultaneously transmit or receive at least one of a general sidelink message, signaling related to the general sidelink message, a Uu message, and signaling related to the Uu message. In various embodiments, unless the UE may support multiple transmission or reception hardware (e.g., antenna and RF) and thus may simultaneously transmit or receive several messages or signalings from among a sidelink relay discovery message, signaling related to the sidelink relay discovery message, a general sidelink message, signaling related to the general sidelink message, a Uu message, and signaling related to the Uu message, the UE may select a message or signaling to be transmitted or received preferentially. In various embodiments, even when the UE may support multiple transmission hardware (e.g., antenna and RF), the UE may determine that it is impossible to simultaneously transmit several messages or signalings from among a sidelink relay discovery message, signaling related to the sidelink relay discovery message, a general sidelink message, signaling related to the general sidelink message, a Uu message, and signaling related to the Uu message. In this case, the UE may select a message or signaling that needs to be transmitted preferentially from among the messages and signalings. The UE may determine, based on a priority of a sidelink relay discovery message, a priority of a general sidelink message, and a priority of a Uu message, transmission or reception priorities of the sidelink relay discovery message, signaling related to the sidelink relay discovery message, the general sidelink message, signaling related to the general sidelink message, the Uu message, and signaling related to the Uu message. When the UE configures a MAC PDU including a sidelink relay discovery message, the UE may select a message to be included in the MAC PDU based on a priority of at least one of the sidelink relay discovery message and a general sidelink message. When the UE configures a MAC PDU from among several sidelink relay discovery messages, the UE may select a message to be included in the MAC PDU based on a priority of each of the sidelink relay discovery messages.

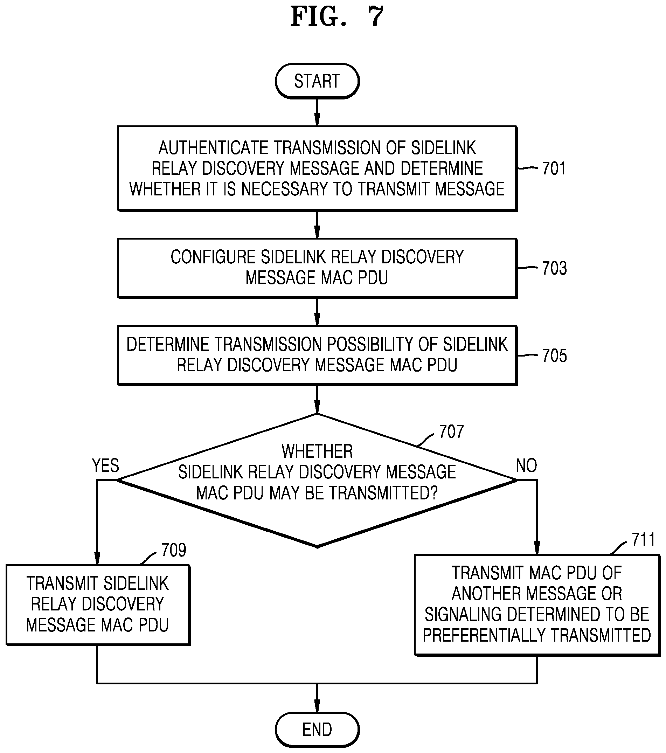

FIG. 7 is a flowchart for describing an operation in which a UE determines a transmission priority of a sidelink relay discovery message, according to an embodiment of the disclosure.

Referring to FIG. 7, an operation in which a UE determines a transmission priority of a sidelink relay discovery message may include operations 701 to 711. In various embodiments, a UE may include a sidelink relay UE or a sidelink remote UE authenticated to transmit a sidelink relay discovery message. In operation 701, a UE may be authenticated to transmit a sidelink relay discovery message, and may determine whether it is necessary to transmit the sidelink relay discovery message. The sidelink relay discovery message that may be transmitted by the UE in operation 701 may include a sidelink relay discovery message of FIGS. 6A to 6B, for example, a first message, a second message, or a third message. When it is determined that it is necessary to transmit the sidelink relay discovery message, in operation 703, the UE may configure a MAC PDU including the sidelink relay discovery message.

An operation of the UE that configures the MAC PDU including the sidelink relay discovery message in operation 703 will be described.

The UE may determine whether a general sidelink message (at least one of PC5-S signaling, PC5-RRC, and PC5 MAC CE) may be included in the same MAC PDU in addition to a sidelink relay discovery message. When the UE is configured with one or more logical channels for sidelink relay discovery messages, the UE may determine whether sidelink relay discovery messages of different logical channels may be included in the same MAC PDU. When the UE determines that an SRC ID and a DST ID of a general sidelink message and a sidelink relay discovery message are the same, the UE may include the general sidelink message and the sidelink relay discovery message in the same MAC PDU.

According to various embodiments, for a general sidelink message and a sidelink relay discovery message determined to be included in the same MAC PDU, the UE may determine priority information configured for logical channels corresponding to the general sidelink message and the sidelink relay discovery message. The UE may include messages in the MAC PDU, starting with a message with a higher priority from among the sidelink relay discovery message and the general sidelink message, based on the priority configured for each logical channel. For example, it may be assumed that a logical channel priority value of a general sidelink message A is set to 3, a logical channel priority value of a sidelink relay discovery message B is set to 2, and a logical channel with a lower priority value has a higher priority. In this case, when the UE determines that the general sidelink message A and the sidelink relay discovery message B may be included in the same MAC PDU, the UE may first include the sidelink relay discovery message B with a higher priority in the MAC PDU. When the UE determines that a message may be added to the MAC PDU, the UE may add the general sidelink message A to the MAC PDU and may configure the MAC PDU.

For one or more sidelink relay discovery messages determined by the UE to be included in the same MAC PDU, the UE may determine priority information configured for each logical channel corresponding to each sidelink relay discovery message. The UE may include messages in the MAC PDU, starting with a sidelink relay discovery message with a higher priority configured for a logical channel. For example, it may be assumed that a logical channel priority value of a sidelink relay discovery message A is set to 2, a logical channel priority value of a sidelink relay discovery message B is set to 1, and a logical channel with a lower priority value has a higher priority. When the UE determines that the sidelink relay discovery message A and the sidelink relay discovery message B may be included in the same MAC PDU, the UE may first include the sidelink relay discovery message B with a higher priority in the MAC PDU, and when a message may be added to the MAC PDU, the UE may add the sidelink relay discovery message A and may configure the MAC PDU.

For a sidelink relay discovery message and a general sidelink message determined by the UE to be included in the same MAC PDU, when it is determined that a priority value configured for a logical channel of the sidelink relay discovery message and a priority value configured for a logical channel of the general sidelink message are the same, the UE may arbitrarily select a message to be first added to the MAC PDU.

Various embodiments of a priority value configured for a logical channel of the sidelink relay discovery message will be described with reference to Table 2 to Table 12.

In operation 705, the UE may determine whether the MAC PDU including the sidelink relay discovery message may be transmitted. That is, the UE may perform an operation of determining a transmission priority of the MAC PDU including the sidelink relay discovery message.

In an embodiment of the disclosure, an operation in which the UE determines transmission of the MAC PDU including the sidelink relay discovery message in operation 705 may include the following.
- Operation in which the UE determines that there is no uplink message transmission,
- Operation in which the UE determines that uplink message transmission and sidelink relay discovery message transmission may be simultaneously performed, or
- Operation in which the UE determines that there are no RACH preamble, MAC PDU of Msg3 buffer, MAC PDU of MSGA buffer or uplink MAC PDU determined to have a high priority, to be transmitted via uplink, and a priority of the sidelink relay discovery message is higher than a priority of the uplink MAC PDU

When a condition according to at least one of the above operations is satisfied, the UE may determine that the MAC PDU including the sidelink relay discovery message may be transmitted. An operation in which the UE determines that a priority of the sidelink relay discovery message is higher than a priority of the uplink MAC PDU will be described below.

In an embodiment of the disclosure, an operation in which the UE determines transmission of the MAC PDU including the sidelink relay discovery message in operation 705 may include the following.
- Operation in which the UE determines that there is no uplink message transmission and general sidelink message transmission,
- Operation in which the UE determines that uplink message transmission, sidelink relay discovery message transmission, and general sidelink message transmission may be simultaneously performed, or,
- Operation in which the UE determines that there are no RACH preamble, MAC PDU of Msg3 buffer, MAC PDU of MSGA buffer, or uplink MAC PDU determined to have a high priority, to be transmitted via uplink, and a priority of the sidelink relay discovery message is higher than a priority of the uplink MAC PDU and higher than a priority of the general sidelink message

When a condition according to at least one of the above operations is satisfied, the UE may determine that the MAC PDU including the sidelink relay discovery message may be transmitted. An operation in which the UE determines that a priority of the sidelink relay discovery message is higher than a priority of the uplink MAC PDU and an operation in which the UE determines that a priority of the sidelink relay discovery message is higher than a priority of the general sidelink message will be described below.

When the UE determines in operation 707 that the MAC PDU including the sidelink relay discovery message may be transmitted, the UE may proceed to operation 709. In operation 709, the UE may transmit the MAC PDU including the sidelink relay discovery message in a lower layer (e.g., a physical layer). When the UE determines in operation 707 that the MAC PDU including the sidelink relay discovery message may not be transmitted, the UE proceed to operation 711. In operation 711, the UE may transmit a MAC PDU of another message or signaling determined to be transmitted prior to the MAC PDU including the sidelink relay discovery message in a lower layer (e.g., a physical layer).

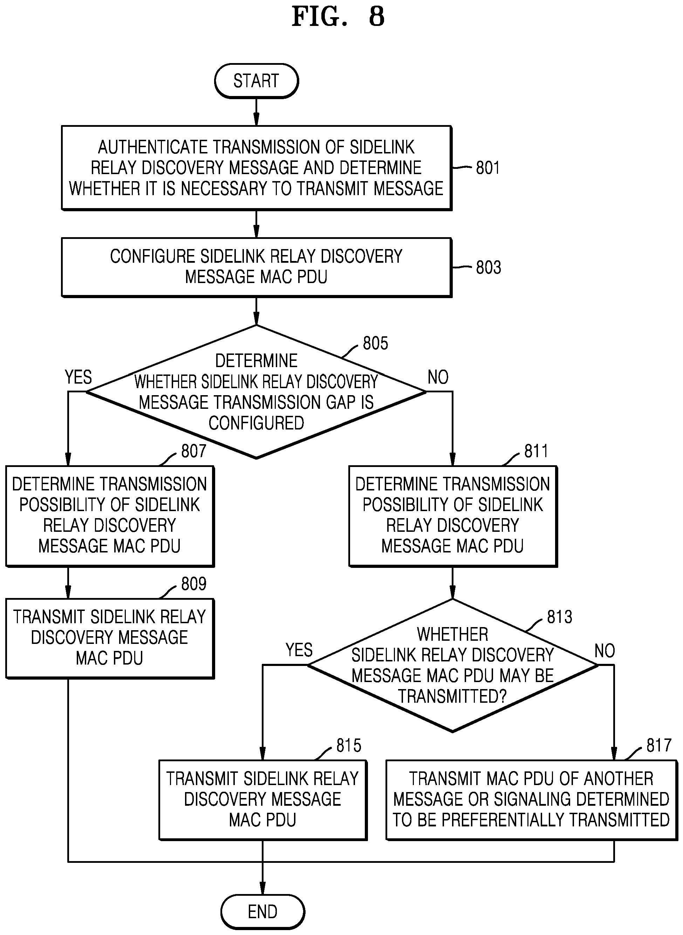

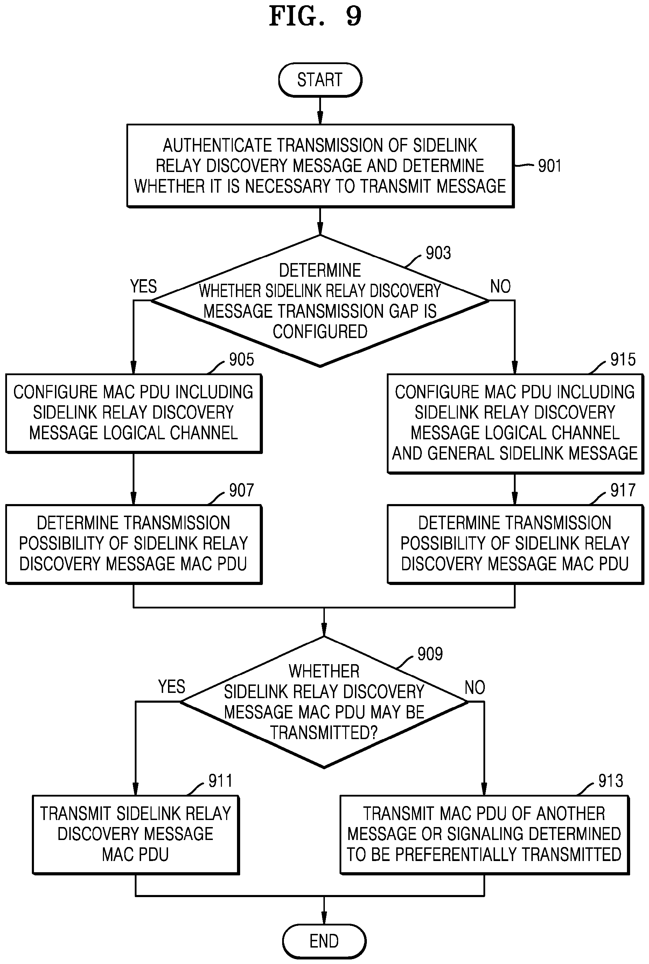

According to various embodiments of the disclosure, priority configuration performed by the UE to determine a priority value of a logical channel corresponding to a sidelink relay discovery message will be described. A method and procedure for configuring a priority of a logical channel corresponding to a sidelink relay discovery message described below may be applied to operations 703 and 705 of FIG. 7, operations 803, 805, 807, 811, and 813 of FIG. 8, and operations 907, 909, 915, and 917 of FIG. 9.

A priority value of a logical channel corresponding to a sidelink relay discovery message may be determined by the UE by using a method in which the value is configured by the BS or a method in which the value is pre-configured in the UE. The method in which the value is pre-configured in the UE may include a method in which the value is determined based pre-configuration or a method in which the value is determined based on default configuration.

A priority value of a logical channel of a general sidelink message or a priority value of PC5-MAC CE other than a sidelink relay discovery message may be determined by the UE by using a method in which the priority value is configured by the BS or a method in which the priority value is pre-configured in the UE. The method in which the priority value is pre-configured in the UE may include a method in which the value is determined based on pre-configuration or a method in which the value is determined based on default configuration.

In an embodiment of the disclosure, a transmission priority value of a logical channel corresponding to a sidelink relay discovery message of the UE may be configured as a fixed value. For example, a transmission priority value of a logical channel corresponding to a sidelink relay discovery message may be set to 1 corresponding to a highest priority. In an embodiment, a logical channel corresponding to a sidelink relay discovery message may be configured to be the same as a logical channel (SCCH) through which PC5-RRC or PC5-S signaling from among a general sidelink message is transmitted. In an embodiment, a logical channel corresponding to a sidelink relay discovery message may be configured to be the same as a logical channel (SCCH) through which PC5-RRC or PC5-S signaling from among a general sidelink message is transmitted and another logical channel identifier may be configured for the purpose of the sidelink relay discovery message. In an embodiment, a logical channel corresponding to a sidelink relay discovery message may be configured as a logical channel (e.g., SCCH1) different from a logical channel (SCCH) through which PC5-RRC or PC5-S signaling from among a general sidelink message is transmitted. In an embodiment, a logical channel corresponding to a sidelink relay discovery message may be configured to be the same as a logical channel (STCH) through which PC5 user packet from among a general sidelink message is transmitted. In an embodiment, a logical channel corresponding to a sidelink relay discovery message may be configured to be the same as a logical channel (STCH) through which PC5 user packet from among a general sidelink message is transmitted, and another logical channel identifier may be configured for the purpose of the sidelink relay discovery message.

A priority between messages transmitted in a sidelink including a logical channel corresponding to a sidelink relay discovery message may be configured based on one of Table 2 to Table 9. Table 2 to Table 9 may indicate priority configuration, e.g., an order of messages from a message with a high priority to a message with a low priority. In various embodiments, it may be determined that as a priority value decreases, a priority increases. Examples of Table 2 to Table 9 may include a case where a priority value of a logical channel corresponding to a sidelink relay discovery message is fixed. The UE may determine a transmission priority of a message transmitted in a sidelink including a logical channel corresponding to a sidelink relay discovery message based on at least one of Table 2 to Table 9. When the UE configures a MAC PDU to be transmitted, the UE may use at least one sidelink message priority configuration from among Table 2 to Table 9 to determine a priority of a logical channel to be included in the MAC PDU. That is, from among logical signals of sidelink messages that are determined to be included in the same MAC PDU, the UE may determine a logical channel of a sidelink message to be first included in the MAC PDU based on at least one priority from among Table 2 to Table 9. When the UE configures a MAC PDU (mapped to TB) of one or more sidelink messages to be transmitted, the UE may use at least one sidelink message priority configuration from among Table 2 to Table 9 to determine a MAC PDU (TB) of a sidelink message to first use a sidelink transmission resource. When the UE should transmit one or more sidelink messages, the UE may use at least one sidelink message priority configuration from among Table 2 to Table 9 to determine a sidelink message to be transmitted first.

**[Table 2]**

| |
|---|
| Data from SCCH1 (logical channel corresponding to a sidelink relay discovery message) |
| Data from SCCH (logical channel corresponding to PC5-S signaling or PC5-RRC) |
| Sidelink CSI Reporting MAC CE |
| Data from any STCH (logical channel corresponding to PC5 user packet) |

**[Table 3]**

| |
|---|
| Data from SCCH (logical channel corresponding to PC5-S signaling or PC5-RRC) |
| Data from SCCH1 (logical channel corresponding to a sidelink relay discovery message) |
| Sidelink CSI Reporting MAC CE |
| Data from any STCH (logical channel corresponding to PC5 user packet) |

**[Table 4]**

| |
|---|
| Data from SCCH (logical channel corresponding to PC5-S signaling or PC5-RRC) |
| Sidelink CSI Reporting MAC CE |
| Data from SCCH1 (logical channel corresponding to a sidelink relay discovery message) |
| Data from any STCH (logical channel corresponding to PC5 user packet) |

**[Table 5]**

| |
|---|
| Data from SCCH, Data from SCCH1 (when a priority of a logical channel corresponding to PC5-S signaling or PC5-RRC and a logical channel corresponding to a sidelink relay discovery message are configured to be the same, a UE may arbitrarily select a message to be prioritized. (the decision is up to UE implementation)) |
| Sidelink CSI Reporting MAC CE |
| Data from any STCH (logical channel corresponding to PC5 user packet) |

**[Table 6]**

| |
|---|
| Data from SCCH (logical channel corresponding to PC5-S signaling or PC5-RRC) |
| Sidelink CSI Reporting MAC CE |
| Data from any STCH (logical channel corresponding to PC5 user packet) |
| Data from SCCH1 (logical channel corresponding to a sidelink relay discovery message) |

**[Table 7]**

| |
|---|
| Data from SL logical channel for SL discovery (logical channel corresponding to a sidelink relay discovery message, SCCH, SCCH1 or STCH) |
| Data from SCCH (logical channel corresponding to PC5-S signaling or PC5-RRC) |
| Sidelink CSI Reporting MAC CE |
| Data from any STCH (logical channel corresponding to PC5 user packet) |

**[Table 8]**

| |
|---|
| Data from SCCH (logical channel corresponding to PC5-S signaling or PC5-RRC) |
| Data from SL logical channel for SL discovery (logical channel corresponding to a sidelink relay discovery message, SCCH, SCCH1 or STCH) |
| Sidelink CSI Reporting MAC CE |
| Data from any STCH (logical channel corresponding to PC5 user packet) |

**[Table 9]**

| |
|---|
| Data from SCCH (logical channel corresponding to PC5-S signaling or PC5-RRC) |
| Sidelink CSI Reporting MAC CE |
| Data from SL logical channel for SL discovery (logical channel corresponding to a sidelink relay discovery message, SCCH, SCCH1 or STCH) |
| Data from any STCH (logical channel corresponding to PC5 user packet) |

In an embodiment of the disclosure, a transmission priority value of a logical channel corresponding to a sidelink relay discovery message may be set to, for example, any one of 1 to 8. For example, an upper layer (e.g., Upper layer or V2X layer) of the UE may select a transmission priority value of a logical channel corresponding to a sidelink relay discovery message from 1 to 8, and may transmit the selected priority value to a lower layer (e.g., AS layer) of the UE. For example, the BS may select a transmission priority value of a logical channel corresponding to a sidelink relay discovery message from 1 to 8, and may transmit the selected priority value to the UE. Here, the priority value 1 corresponds to a highest priority, and the priority value 8 corresponds to a lowest priority. When the UE or the BS configures a priority value of a sidelink relay discovery message, the priority value may be determined based on a use case (e.g., public safety, wearable, or V2X) in which the sidelink relay discovery message is used. For example, a priority value of a sidelink relay discovery message used in a use case with a high priority may be configured as a lower value than a priority value of a sidelink relay discovery message used in a use case with a low priority. When the UE or the BS configures a priority value of a sidelink relay discovery message, a priority value of a sidelink relay discovery message used for each sidelink relay discovery model (e.g., model shown in FIG. 6A or 6B) may be configured differently. For example, a sidelink relay discovery message used in a model of FIG. 6A, for example, a priority value of a first message, may be configured as a lower value than a priority value of a sidelink relay discovery message used in a model of FIG. 6B, for example, a priority of a second message or a third message of FIG. 6B. In an example, a priority value of a sidelink relay discovery message used in a model of FIG. 6B, for example, a priority value of a second message or a third message of FIG. 6B, may be configured as a lower value than a priority value of a sidelink relay discovery message used in a model of FIG. 6A, for example, a priority value of a first message of FIG. 6A. In an example, a sidelink relay discovery message used in a model of FIG. 6A, for example, a first message of FIG. 6A, and a sidelink relay discovery message used in a model of FIG. 6B, for example, a second message and a third message of FIG. 6B, may be configured with separate priority values (e.g., different priority values or the same priority value for at least some).

In an embodiment, a logical channel corresponding to a sidelink relay discovery message may be configured to be the same as a logical channel (SCCH) through which PC5-RRC or PC5-S signaling from among a general sidelink message is transmitted. In an embodiment, a logical channel corresponding to a sidelink relay discovery message may be configured to be the same as a logical channel (SCCH) through which PC5-RRC or PC5-S signaling from among a general sidelink message is transmitted, and another logical channel identifier may be configured for the purpose of the sidelink relay discovery message. In an embodiment, a logical channel corresponding to a sidelink relay discovery message may be configured as a logical channel (e.g., SCCH1) different from a logical channel (SCCH) through which PC5-RRC or PC5-S signaling from among a general sidelink message is transmitted. In an embodiment, a logical channel corresponding to a sidelink relay discovery message may be configured to be the same as a logical channel (STCH) through which PC5 user packet from among a general sidelink message is transmitted. In an embodiment, a logical channel corresponding to a sidelink relay discovery message may be configured to be the same as a logical channel (STCH) through which PC5 user packet from among a general sidelink message is transmitted, and another logical channel identifier may be configured for the purpose of the sidelink relay discovery message.

A priority between messages transmitted in a sidelink including a logical channel corresponding to a sidelink relay discovery message may be configured based on at least one of Table 10 to Table 12. Table 10 to Table 12 may indicate priority configuration, for example, an order of messages from a message with a high priority to a message with a low priority. In various embodiments, it may be determined that as a priority value decreases, a priority increases. Examples of Table 10 to Table 12 may include a case where a priority value of a logical channel corresponding to a sidelink relay discovery message is set to an integer value between 1 and 8. The UE may determine a transmission priority of a message transmitted in a sidelink including a logical channel corresponding to a sidelink relay discovery message based on at least one of Table 10 to Table 12. When the UE configures a MAC PDU to be transmitted, the UE may use at least one sidelink message priority configuration from among Table 10 to Table 12 to determine a priority of a logical channel to be included in the MAC PDU. That is, from among logical channels of sidelink messages that are determined to be included in the same MAC PDU, the UE may determine a logical channel of a sidelink message to be first included in the MAC PDU based on at least one priority from among Table 10 to Table 12. When the UE configures a MAC PDU (mapped to TB) of one or more sidelink messages to be transmitted, the UE may use at least one sidelink message priority configuration from among Table 10 to Table 12 to determine a MAC PDU (TB) of a sidelink message to first use a sidelink transmission resource. When the UE should transmit one or more sidelink messages, the UE may use at least one sidelink message priority configuration from among Table 10 to Table 12 to determine a sidelink message to be transmitted first.

**[Table 10]**

| |
|---|
| Data from SCCH (logical channel corresponding to PC5-S signaling or PC5-RRC message) |
| Sidelink CSI Reporting MAC CE |
| Data from SCCH1 (logical channel corresponding to a sidelink relay discovery message), Data from any STCH (logical channel corresponding to sidelink user packet) (A priority may be determined according to priority values configured for a logical channel corresponding to a sidelink relay discovery message and a logical channel corresponding to sidelink user pack) |

**[Table 11]**

| |
|---|
| Data from SCCH (logical channel corresponding to PC5-S signaling or PC5-RRC message) |
| Sidelink CSI Reporting MAC CE |
| Data from SL logical channel for SL discovery (logical channel corresponding to a sidelink relay discovery message), Data from any STCH (logical channel corresponding to sidelink user packet) (A priority may be determined according to priority values configured for a logical channel corresponding to a sidelink relay discovery message and a logical channel corresponding to sidelink user packet) |

**[Table 12]**

| |
|---|
| Data from SCCH (logical channel corresponding to PC5-S signaling or PC5-RRC message) |
| Sidelink CSI Reporting MAC CE |
| Data from STCH (logical channel corresponding to PC5 user packet or logical channel corresponding to a sidelink relay discovery message) (A priority may be determined according to priority values configured for a logical channel corresponding to a sidelink relay discovery message and a logical channel corresponding to sidelink user packet) |

According to an embodiment of the disclosure, logical channels configured for sidelink relay discovery messages used in a model of FIG. 6A and a model of FIG. 6B may be the same or different from each other. For example, a logical channel A may be configured for a sidelink relay discovery message used in a model of FIG. 6A, and a logical channel B may be configured for a sidelink relay discovery message used in a model of FIG. 6B. For example, a logical channel A may be configured for a sidelink relay discovery message used in a model of FIG. 6A, for example, a first message of FIG. 6A; a logical channel B may be configured for a sidelink relay discovery message used in a model of FIG. 6B, for example, a second message of FIG. 6B; and a logical channel C may be configured for a sidelink relay discovery message, for example, a third message of FIG. 6B.

When a logical channel is configured for each sidelink relay discovery message used in a sidelink relay discovery model and a priority value is differently configured for each logical channel, the UE may determine a priority between sidelink messages based on a priority value configured for a sidelink relay discovery message as in at least one of Table 10 to Table 12.

An operation in which the UE determines a priority between a sidelink relay discovery message and a general sidelink message in operation 705 of FIG. 7 is as follows.

The UE may determine a priority of a sidelink relay discovery message and a priority of a general sidelink message based on at least one of Table 2 to Table 12. For example, the UE may determine a priority of a MAC PDU including the sidelink relay discovery message and a priority of a MAC PDU including the general sidelink message based on at least one of Table 2 to Table 12. The UE may determine a scheduling request (SR) transmission priority and a sidelink buffer status reporting (SL-BSR) transmission priority for transmission of the sidelink relay discovery message to be the same as a priority of the sidelink relay discovery message. The UE may determine an SR transmission priority and an SL-BSR transmission priority for transmission of the general sidelink message to be the same as a priority of the general sidelink message. According to an embodiment, the UE determine a priority for transmission of at least one of the sidelink relay discovery message, the SR for the sidelink relay discovery message, and the SL-BSR for the sidelink relay discovery message, and transmission of at least one of the general sidelink message, the SR for the general sidelink message, and the SL-BSR for the general sidelink message. In this case, the UE may determine a priority value of the sidelink relay discovery message, the SR for the sidelink relay discovery message, and the SL-BSR for the sidelink relay discovery message based on a priority value of a logical channel configured for the sidelink relay discovery message. Also, in this case, the UE may determine a priority value of the general sidelink message, the SR for the general sidelink message, and the SL-BSR for the general sidelink message based on a priority value of a logical channel configured for the general sidelink message.

An operation in which the UE determines a priority between a sidelink relay discovery message and an uplink message in operation 705 of FIG. 7 is as follows.

In an embodiment, the UE may determine that priorities of an RACH preamble, a MAC PDU of Msg3 buffer, and a MAC PDU of MSGA buffer of an uplink message are higher than a priority of a sidelink relay discovery message. When the UE determines that there is the RACH preamble, the MAC PDU of Msg3 buffer, or the MAC PDU of MSGA buffer, the UE may determine to preferentially transmit the RACH preamble, the MAC PDU of Msg3 buffer, or the MAC PDU of MSGA buffer over the sidelink relay discovery message. In an embodiment, the UE may determine a priority of a MAC PDU including the uplink message except for the RACH preamble, the MAC PDU of Msg3 buffer, or the MAC PDU of MSGA buffer based on a priority value configured for the MAC PDU including the uplink message. In an embodiment, the UE may determine a priority of the sidelink relay discovery message based on a priority value configured for a MAC PDU including the sidelink relay discovery message. In an embodiment, the UE may compare a priority value of an uplink message MAC PDU (i.e., a MAC PDU including the uplink message) with a priority value of a sidelink relay discovery message MAC PDU (i.e., a MAC PDU including the sidelink relay discovery message), and may determine that a message with a lower priority value has a higher priority. In an embodiment, when the UE determines that priority values of the uplink message and the sidelink relay discovery message are the same, the UE may select an arbitrary message from the uplink message and the sidelink relay discovery message as a message with a high priority. In an embodiment, the UE may compare a priority value of a MAC PDU of the uplink message with an uplink priority threshold, and may determine whether the priority value of the uplink message MAC PDU is lower than the threshold. When the UE determines that the priority value of the uplink message MAC PDU is lower than the threshold, the UE may determine that a priority of the uplink message MAC PDU is higher than a priority of the sidelink relay discovery message MAC PDU. In an embodiment, the UE may compare a priority value of a MAC PDU including the sidelink relay discovery message with a sidelink relay discovery message priority threshold, and may determine whether the priority value of the sidelink relay discovery message MAC PDU is lower than the threshold. When the UE determines that the priority value of the sidelink relay discovery message MAC PDU is lower than the threshold, the UE may determine that a priority of the sidelink relay discovery message MAC PDU is higher than a priority of the uplink message MAC PDU. In an embodiment, the UE may compare a priority value of a MAC PDU including the uplink message with an uplink priority threshold, and may compare a priority value of a MAC PDU including the sidelink relay discovery message with a sidelink relay discovery message priority threshold. The UE may determine whether the priority value of the MAC PDU including the uplink message is lower than the uplink priority threshold, and may determine whether the priority value of the MAC PDU including the sidelink relay discovery message is lower than the sidelink relay discovery message priority threshold. When the UE determines that the priority value of the uplink message MAC PDU is not lower than the uplink priority threshold and the priority value of the sidelink relay discovery message MAC PDU is lower than the sidelink relay discovery message priority threshold, the UE may determine that a priority of the sidelink relay discovery message MAC PDU is higher than a priority of the uplink message MAC PDU. When the UE determines that the priority value of the uplink message MAC PDU is lower than the uplink message threshold and the priority value of the sidelink relay discovery message MAC PDU is not lower than the sidelink relay discovery message priority threshold, the UE may determine that a priority of the uplink message MAC PDU is higher than a priority of the sidelink relay discovery message MAC PDU. In an embodiment, when the UE determines that the priority value of the MAC PDU including the uplink message and the priority value of the MAC PDU including the sidelink relay discovery message are respectively lower than the priority thresholds, the UE may select an arbitrary message from among the uplink message and the sidelink relay discovery message as a message with a higher priority. In an embodiment, when the UE determines that the priority value of the uplink message MAC PDU and the priority value of the sidelink relay discovery message MAC PDU are respectively not lower than the priority thresholds, the UE may select an arbitrary message from among the uplink message MAC PDU and the sidelink relay discovery message MAC PDU as a message with a higher priority. The UE may obtain uplink priority threshold configuration information or sidelink relay discovery message priority threshold configuration information from the BS or from pre-configured information. An uplink message priority threshold or a sidelink relay discovery message priority threshold may be configured and may be used to determine a priority of an uplink message MAC PDU or determine a priority of a sidelink relay discovery message MAC PDU. A priority threshold may be set to one value, and may be applied to determine both a priority of a sidelink relay discovery message MAC PDU and a priority of an uplink message MAC PDU. When the UE should determine a priority between the uplink message and an SR for the sidelink relay discovery message or an SL-BSR for the sidelink relay discovery message, the UE may determine a priority value of the SR for the sidelink relay discovery message and a priority value of the SL-BSR for the sidelink relay discovery message based on a priority value of a logical channel configured for the sidelink relay discovery message. The UE may compare a priority value of the SR for the sidelink relay discovery message, a priority value of the SL-BSR for the sidelink relay discovery message, and a priority value of the uplink message, and may determine that a message or signaling with a lower priority value has a higher priority.

When the UE is authenticated as a sidelink relay UE or a sidelink remote UE, the UE may be configured with a sidelink relay discovery message reception gap (SL discovery gap RX). The sidelink relay discovery message reception gap may be configured by the BS in the UE (e.g., configured through a system information block message or an RRC dedicated message) or may be obtained from information pre-configured in the UE. The UE may transmit sidelink relay discovery message reception gap configuration related help information (e.g., at least one of a gap pattern desired by the UE and a sidelink relay discovery message priority) to the BS, and may obtain the sidelink relay discovery message reception gap through an RRC dedicated message from the BS. The sidelink relay discovery message reception gap configuration information may include one or more gap patterns including sidelink relay discovery message reception interval information. The reception interval information of the sidelink relay discovery message reception gap may correspond to information about a time interval configured so that the UE does not perform Uu message transmission/reception with the BS in order to receive a sidelink relay discovery message. When it is difficult for the UE to simultaneously perform sidelink relay discovery message reception and Uu message transmission/reception with the BS (e.g., when it is difficult due to hardware limitations or transmission power limitations of the UE), the sidelink relay discovery message reception gap may be configured as a time allowed to prioritize the sidelink relay discovery message reception over the Uu message transmission/reception with the BS.

According to an embodiment of the disclosure, when the sidelink relay discovery message reception gap is configured, the UE may not prioritize Uu message transmission/reception other than signaling related to a random access (RACH) procedure over sidelink relay discovery message reception. Also, in this case, the UE may prioritize the sidelink relay discovery message reception in a time configured as a reception interval based on a reception gap pattern.

According to an embodiment of the disclosure, when the sidelink relay discovery message reception gap is configured, a gap pattern may include one or more reception intervals and priority threshold information of a Uu message. The UE may not prioritize, over sidelink relay discovery message reception, Uu message transmission/reception other than signaling related to an RACH procedure and a Uu message with a priority lower than a priority threshold (when the UE may determine a priority value of a Uu MAC PDU). Also, the UE may prioritize the sidelink relay discovery message reception in a time configured as a reception interval based on a reception gap pattern.

According to an embodiment of the disclosure, when the sidelink relay discovery message reception gap is configured, a gap pattern may include information of one or more reception intervals and priority threshold information of a sidelink relay discovery message. When a priority value of the sidelink relay discovery message (when the UE may determine the priority value of the sidelink relay discovery message) is lower than a priority threshold, the UE may not prioritize Uu message transmission/reception other than signaling related to an RACH procedure over sidelink relay discovery message reception. Also, the UE may prioritize the sidelink relay discovery message reception in a time configured as a reception interval based on a reception gap pattern.

When the UE is authenticated as a sidelink relay UE or a sidelink remote UE, the UE may be configured with a sidelink relay discovery message transmission gap (SL discovery gap TX). The sidelink relay discovery message transmission gap may be configured by the BS in the UE (e.g., configured through a system information block message or an RRC dedicated message) or may be obtained from information pre-configured in the UE. The UE may transmit sidelink relay discovery message transmission gap configuration related help information (e.g., at least one of a gap pattern desired by the UE and a sidelink relay discovery message priority) to the BS, and may obtain the sidelink relay discovery message transmission gap through an RRC dedicated message from the BS. The sidelink relay discovery message transmission gap configuration information may include one or more gap patterns including sidelink relay discovery message transmission interval information. The transmission interval information of the sidelink relay discovery message transmission gap may correspond to a time interval configured so that the UE does not perform Uu message transmission/reception with the BS in order to transmit a sidelink relay discovery message. When it is difficult for the UE to simultaneously perform sidelink relay discovery message transmission and Uu message transmission/reception with the BS (e.g., it is difficult due to hardware limitations or transmission power limitations of the UE), the sidelink relay discovery message transmission gap may be configured as a time allowed to prioritize the sidelink relay discovery message transmission over the Uu message transmission/reception with the BS.

According to an embodiment of the disclosure, when the sidelink relay discovery message transmission gap is configured, the UE may not prioritize Uu message transmission/reception other than signaling related to an RACH procedure over sidelink relay discovery message transmission. Also, the UE may prioritize the sidelink relay discovery message transmission in a time configured as a transmission interval based on a transmission gap pattern.

According to an embodiment of the disclosure, when the sidelink relay discovery message transmission gap is configured, a gap pattern may include one or more transmission intervals and priority threshold information of a Uu message. The UE may not prioritize, over sidelink relay discovery message transmission, Uu message transmission/reception other than signaling related to an RACH procedure and a Uu message with a priority lower than a priority threshold (when the UE may determine a priority value of a Uu MAC PDU). Also, the UE may prioritize the sidelink relay discovery message transmission in a time configured as a transmission interval based on a transmission gap pattern.

According to an embodiment of the disclosure, when the sidelink relay discovery message transmission gap is configured, a gap pattern may include information of one or more transmission intervals and priority threshold information of a sidelink relay discovery message. When a priority value of the sidelink relay discovery message (when the UE may determine the priority value of the sidelink relay discovery message) is lower than a priority threshold, the UE may not prioritize Uu message transmission/reception other than signaling related to an RACH procedure over sidelink relay discovery message transmission. Also, the UE may prioritize the sidelink relay discovery message transmission in a time configured as a transmission interval based on a transmission gap pattern.

According to various embodiments of the disclosure, when the UE determines to transmit a sidelink relay discovery message and a sidelink relay discovery message transmission gap is configured in the UE, the UE may preferentially transmit the sidelink relay discovery message determined to be preferentially transmittable in the sidelink relay discovery message transmission gap. The UE may differently apply a procedure of determining priorities of a sidelink relay discovery message MAC PDU and an uplink message MAC PDU when the sidelink relay discovery message transmission gap is configured and when the sidelink relay discovery message transmission gap is not configured. Next, an operation in which the UE determines a transmission priory by considering sidelink relay discovery message transmission gap configuration when it is determined to transmit a sidelink relay discovery message will be described with reference to FIGS. 8 and 9.

FIG. 8 illustrates an operation in which, when a sidelink relay discovery message MAC PDU configured by a UE may include a logical channel corresponding to a sidelink relay discovery message or a logical channel corresponding to a general sidelink message, the UE determines a transmission priority by considering a sidelink relay discovery message transmission gap. When the UE determines transmission priorities of a sidelink relay discovery message MAC PDU and an uplink message MAC PDU, if the UE determines that a sidelink relay discovery message transmission gap is configured and a condition for preferentially transmitting the sidelink relay discovery message MAC PDU is satisfied, the UE may preferentially transmit the sidelink relay discovery message MAC PDU. When the UE determines transmission priorities of the sidelink relay discovery message MAC PDU and the uplink message MAC PDU, if the sidelink relay discovery message transmission gap is not configured, the UE may perform an operation of determining a priority between the sidelink relay discovery message MAC PDU and the uplink message MAC PDU by using a procedure of FIG. 7, for example, operation 705 of FIG. 7.

FIG. 9 illustrates an operation in which, when a sidelink relay discovery message MAC PDU may not include a logical channel corresponding to a general sidelink message other than a logical channel corresponding to a sidelink relay discovery message, the UE determines a transmission priority by considering a sidelink relay discovery message transmission gap. When the UE determines transmission priorities of a sidelink relay discovery message MAC PDU and an uplink message MAC PDU, if the UE determines that a sidelink relay discovery message transmission gap is configured and a condition for preferentially transmitting the sidelink relay discovery message MAC PDU is satisfied, the UE may preferentially transmit the sidelink relay discovery message MAC PDU. When the UE determines transmission priorities of the sidelink relay discovery message MAC PDU and the uplink message MAC PDU, if the sidelink relay discovery message transmission gap is not configured, the UE may perform an operation of determining a priority between the sidelink relay discovery message MAC PDU and the uplink message MAC PDU by using a procedure of FIG. 7, for example, operation 705 of FIG. 7.

FIG. 8 is a flowchart for describing an operation in which a UE determines a transmission priority of a sidelink relay discovery message, according to an embodiment of the disclosure.

Referring to FIG. 8, an operation in which a UE determines a transmission priority of a sidelink relay discovery message may include operations 801 to 817. In various embodiments, a UE may include a sidelink relay UE or a sidelink remote UE authenticated to transmit a sidelink relay discovery message. In operation 801, a UE may be authenticated to transmit a sidelink relay discovery message, and may determine whether it is necessary to transmit the sidelink relay discovery message. The sidelink relay discovery message that may be transmitted by the UE in operation 801 may include a sidelink relay discovery message of FIGS. 6A and 6B, for example, a first message, a second message, or a third message. When the UE determines that it is necessary to transmit the sidelink relay discovery message, in operation 803, the UE may configure a MAC PDU including the sidelink relay discovery message.

Hereinafter, an operation in which the UE configures the MAC PDU including the sidelink relay discovery message in operation 803 will be described. The UE may determine whether a general sidelink message (at least one of PC5-S signaling, PC5-RRC, and PC5 MAC CE) may be included in the same MAC PDU in addition to a sidelink relay discovery message. When the UE is configured with one or more logical channels for sidelink relay discovery messages, the UE may determine whether sidelink relay discovery messages of different logical channels may be included in the same MAC PDU. When the UE determines that an SRC ID and a DST ID of each of a general sidelink message and a sidelink relay discovery message are the same, the UE may include the general sidelink message and the sidelink relay discovery message in the same MAC PDU. An operation in which the UE configures a MAC PDU including a sidelink relay discovery message may be the same as operation 703 of FIG. 7.

When the UE determines that a sidelink relay discovery message transmission gap is configured, the UE may include, in a MAC PDU, a logical channel corresponding to a sidelink relay discovery message to be transmitted in a sidelink relay discovery message transmission gap interval. When the UE determines that a logical channel corresponding to a general sidelink message and PC5 MAC CE may be included in the MAC PDU, the UE may configure a sidelink relay discovery message MAC PDU including the logical channel corresponding to the sidelink relay discovery message, the logical channel corresponding to the general sidelink message, and the PC5 MAC CE.

In an embodiment where the UE configures a MAC PDU when a sidelink relay discovery message transmission gap is configured, even when a priority of a logical channel corresponding to a sidelink relay discovery message is not higher than a priority of a logical channel corresponding to a general sidelink message, the UE may include the logical channel corresponding to the sidelink relay discovery message in the MAC PDU. The UE includes the logical channel corresponding to the sidelink relay discovery message in the MAC PDU and may determine that at least one of a logical channel corresponding to a general sidelink message and PC5 MAC CE may be included in the MAC PDU. In this case, the UE may determine priorities of the logical channel corresponding to the general sidelink message and the PC5 MAC CE, and may include them in the MAC PDU in an order of a higher priority. The UE may determine a priority based on at least one of Table 2 to Table 12.

In an embodiment where the UE configures a MAC PDU when a sidelink relay discovery message transmission gap is configured, the UE may determine priorities of a logical channel corresponding to a sidelink relay discovery message, a logical channel corresponding to a general sidelink message, and PC5 MAC CE, and may select the logical channels and the PC5 MAC CE that may be included in the MAC PDU in an order of a higher priority. The UE may determine a priority, based on at least one of Table 2 to Table 12. For the sidelink relay discovery message and the general sidelink message determined to be included in the same MAC PDU, the UE may determine that a priority value configured for the logical channel of the sidelink relay discovery message and a priority value configured for the logical channel of the general sidelink message are the same. In this case, the UE may arbitrarily select a message to be preferentially included in the MAC PDU.

In operation 805, the UE may determine whether a sidelink relay discovery message transmission gap is configured. When the UE determines in operation 805 that the sidelink relay discovery message transmission gap is configured, in operation 807, the UE may determine whether the MAC PDU including the sidelink relay discovery message may be transmitted. That is, the UE may perform an operation of determining a transmission priority of the MAC PDU including the sidelink relay discovery message.

In an embodiment of the discourse, an operation in which the UE determines transmission of the MAC PDU including the sidelink relay discovery message in operation 807 may include the following.
- Operation in which the UE determines that there is no uplink message transmission,
- Operation in which the UE determines that uplink message transmission and sidelink relay discovery message transmission may be simultaneously performed, or,
- Operation in which the UE determines that there are no RACH preamble, MAC PDU of Msg3 buffer, and MAC PDU of MSGA buffer to be transmitted via uplink

When the sidelink relay discovery message transmission gap is configured, the UE may determine that the RACH preamble, MAC PDU of Msg3 buffer, and MAC PDU of MSGA buffer are preferentially transmitted over the sidelink relay discovery message MAC PDU. When the sidelink relay discovery message transmission gap is configured, the UE may determine that an uplink message other than the RACH preamble, MAC PDU of Msg3 buffer, and MAC PDU of MSGA buffer is not preferentially transmitted over the sidelink relay discovery message MAC PDU.

When a condition according to at least one of the above operations is satisfied, the UE may determine that the MAC PDU including the sidelink relay discovery message may be transmitted.

In an embodiment of the disclosure, an operation in which the UE determines transmission of the MAC PDU including the sidelink relay discovery message in operation 807 may include the following.
- Operation in which the UE determines that there is no uplink message transmission,
- Operation in which the UE determines that uplink message transmission and sidelink relay discovery message transmission may be simultaneously performed, or,
- Operation in which the UE determines that there are no RACH preamble, MAC PDU of Msg3 buffer, and MAC PDU of MSGA buffer and there is no uplink message MAC PDU to be transmitted having a priority value lower than an uplink priority threshold configured in the sidelink relay discovery message transmission gap

When the sidelink relay discovery message transmission gap is configured, the UE may determine that the RACH preamble, the MAC PDU of Msg3 buffer, the MAC PDU of MSGA buffer, and the uplink message MAC PDU with the priority value lower than the uplink priority threshold are preferentially transmitted over the sidelink relay discovery message MAC PDU. When the sidelink relay discovery message transmission gap is configured, the UE may determine that an uplink message other than the RACH preamble, the MAC PDU of Msg3 buffer, the MAC PDU of MSGA buffer, and the uplink message MAC PDU with the priority value lower than the uplink priority threshold is not preferentially transmitted over the sidelink relay discovery message MAC PDU.

When a condition according to at least one of the above operations is satisfied, the UE may determine that the MAC PDU including the sidelink relay discovery message may be transmitted.

In an embodiment of the disclosure, an operation in which the UE determines transmission of the MAC PDU including the sidelink relay discovery message in operation 807 may include the following.
- Operation in which the UE determines that there is no uplink message transmission,
- Operation in which the UE determines that uplink message transmission and sidelink relay discovery message transmission may be simultaneously performed, or,
- Operation in which the UE determines that there are no RACH preamble, MAC PDU of Msg3 buffer, and MAC PDU of MSGA buffer and a priority value of the sidelink relay discovery message MAC PDU is lower than a sidelink relay discovery message priority threshold configured in the sidelink relay discovery message transmission gap

When the sidelink relay discovery message transmission gap is configured, the UE may determine that the RACH preamble, MAC PDU of Msg3 buffer, and MAC PDU of MSGA buffer are preferentially transmitted over the sidelink relay discovery message MAC PDU. When the sidelink relay discovery message transmission gap is configured, for an uplink message other than the RACH preamble, MAC PDU of Msg3 buffer, and MAC PDU of MSGA buffer, if a priority value of the sidelink relay discovery message MAC PDU is not lower than the sidelink relay discovery message priority threshold configured in the sidelink relay discovery message transmission gap, the UE may determine that an uplink message MAC PDU to be transmitted is preferentially transmitted.

When a condition according to at least one of the above operations is satisfied, the UE may determine that the MAC PDU including the sidelink relay discovery message may be transmitted.

When the UE determines in operation 807 that the MAC PDU including the sidelink relay discovery message may be transmitted, the UE may proceed to operation 809 and may transmit the MAC PDU including the sidelink relay discovery message in a lower layer (e.g., a physical layer). The UE may determine in operation 807 that the MAC PDU including the sidelink relay discovery message may not be transmitted. That is, the UE may determine that at least one of the RACH preamble, MAC PDU of Msg3 buffer, and MAC PDU of MSGA buffer to be transmitted via uplink should be transmitted. In this case, the UE may transmit at least one of the RACH preamble, MAC PDU of Msg3 buffer, and MAC PDU of MSGA buffer in a lower layer (e.g., a physical layer).

When the UE determines in operation 805 that the sidelink relay discovery message transmission gap is not configured, in operation 811, the UE may perform an operation of determining whether the sidelink relay discovery message MAC PDU may be transmitted. The sidelink relay discovery message MAC PDU may correspond to the MAC PDU configured by the UE in operation 803 when the sidelink relay discovery message transmission gap is not configured. In operation 813, the UE may determine whether the MAC PDU including the sidelink relay discovery message may be transmitted. Operation 813 of the UE may be the same as operation 707 of FIG. 7. When the UE determines in operation 813 that the MAC PDU including the sidelink relay discovery message may be transmitted, the UE may proceed to operation 815 and may transmit the MAC PDU including the sidelink relay discovery message in a lower layer (e.g., a physical layer). When the UE determines in operation 813 that the MAC PDU including the sidelink relay discovery message may not be transmitted, in operation 817, the UE may transmit a MAC PDU of another message or signaling determined to be preferentially transmitted over the MAC PDU including the sidelink relay discovery message in a lower layer (e.g., a physical layer).

FIG. 9 is a flowchart for describing an operation in which a UE determines a transmission priority of a sidelink relay discovery message, according to an embodiment of the disclosure.

Referring to FIG. 9, an operation in which a UE determines a transmission operation of a sidelink relay discovery message may include operations 901 to 917. In various embodiments, a UE may include a sidelink relay UE or a sidelink remote UE authenticated to transmit a sidelink relay discovery message. In operation 901, a UE may be authenticated to transmit a sidelink relay discovery message and may determine whether it is necessary to transmit the sidelink relay discovery message. The sidelink relay discovery message that may be transmitted by the UE in operation 901 may include a sidelink relay discovery message of FIGS. 6A and 6B, for example, a first message, a second message, or a third message. When the UE determines that it is necessary to transmit the sidelink relay discovery message, in operation 903, the UE may determine whether a sidelink relay discovery message transmission gap is configured. When the UE determines in operation 903 that the sidelink relay discovery message transmission gap is configured, in operation 905, the UE may perform an operation of configuring a sidelink relay discovery message MAC PDU to be transmitted in a sidelink relay discovery message transmission gap interval. The UE may configure not to include a logical channel corresponding to a general sidelink message other than a logical channel corresponding to the sidelink relay discovery message, in the sidelink relay discovery message MAC PDU. The UE may transmit a transport block (TB) including the sidelink relay discovery message MAC PDU in the sidelink relay discovery message transmission gap interval. When the UE configures the sidelink relay discovery message MAC PDU, the UE may determine a priority only for logical channels corresponding to sidelink relay discovery messages, and may select logical signals which may be included in the MAC PDU in an order of a higher priority. When the UE determines that an SRC ID and a DST ID of one or more sidelink relay discovery messages are the same, the UE may include the one or more sidelink relay discovery messages in the same MAC PDU. Priority configuration of the sidelink relay discovery messages may be determined based on at least one of Table 2 to Table 12.

In operation 907, the UE may determine whether the configured MAC PDU including the sidelink relay discovery message may be transmitted. That is, the UE may perform an operation of determining a transmission priority of the MAC PDU including the sidelink relay discovery message.

In an embodiment of the disclosure, an operation in which the UE determines transmission of the MAC PDU including the sidelink relay discovery message in operation 907 may include the following.
- Operation in which the UE determines that there is no uplink message transmission,
- Operation in which the UE determines that uplink message transmission and sidelink relay discovery message transmission may be simultaneously transmitted, or,
- Operation in which the UE determines that there are no RACH preamble, MAC PDU of Msg3 buffer, and MAC PDU of MSGA buffer to be transmitted via uplink

When the sidelink relay discovery message transmission gap is configured, the UE may determine that the RACH preamble, MAC PDU of Msg3 buffer, and MAC PDU of MSGA buffer are preferentially transmitted over the sidelink relay discovery message MAC PDU. When the sidelink relay discovery message transmission gap is configured, the UE may determine that an uplink message MAC PDU other than the RACH preamble, MAC PDU of Msg3 buffer, and MAC PDU of MSGA buffer is not preferentially transmitted over the sidelink relay discovery message MAC PDU.

When a condition corresponding to at least one of the above operations is satisfied, the UE may determine that the MAC PDU including the sidelink relay discovery message may be transmitted.

In an embodiment of the disclosure, an operation in which the UE determines transmission of the MAC PDU including the sidelink relay discovery message in operation 907 may include the following.
- Operation in which the UE determines that there is no uplink message transmission,
- Operation in which the UE determines that uplink message transmission and sidelink relay discovery message transmission may be simultaneously transmitted, or,
- Operation in which the UE determines that there are no RACH preamble, MAC PDU of Msg3 buffer, and MAC PDU of MSGA buffer and there is no uplink message MAC PDU to be transmitted having a priority value lower than an uplink priority threshold configured in the sidelink relay discovery message transmission gap

When the sidelink relay discovery message transmission gap is configured, the UE may determine that the RACH preamble, MAC PDU of Msg3 buffer, MAC PDU of MSGA buffer, and the uplink message MAC PDU with the priority value lower than the uplink priority threshold are preferentially transmitted over the sidelink relay discovery message MAC PDU. When the sidelink relay discovery message transmission gap is configured, the UE may determine that an uplink message other than the RACH preamble, MAC PDU of Msg3 buffer, MAC PDU of MSGA buffer, and the uplink message MAC PDU with the priority value lower than the uplink priority threshold is not preferentially transmitted over the sidelink relay discovery message MAC PDU.

When a condition according to at least one of the above operations is satisfied, the UE may determine that the MAC PDU including the sidelink relay discovery message may be transmitted.

In an embodiment of the disclosure, an operation in which the UE determines transmission of the MAC PDU including the sidelink relay discovery message in operation 907 may include the following.
- Operation in which the UE determines that there is no uplink message transmission,
- Operation in which the UE determines that uplink message transmission and sidelink relay discovery message transmission may be simultaneously performed, or,
- Operation in which the UE determines that there are no RACH preamble, MAC PDU of Msg3 buffer, and MAC PDU of MSGA buffer and a priority value of the sidelink relay discovery message MAC PDU is lower than a sidelink relay discovery message priority threshold configured in the sidelink relay discovery message transmission gap

When the sidelink relay discovery message transmission gap is configured, the UE may determine that the RACH preamble, MAC PDU of Msg3 buffer, and MAC PDU of MSGA buffer are preferentially transmitted over the sidelink relay discovery message MAC PDU. When the sidelink relay discovery message transmission gap is configured, the UE, for an uplink message other than the RACH preamble, MAC PDU of Msg3 buffer, and MAC PDU of MSGA buffer, if a priority value of the sidelink relay discovery message MAC PDU is not lower than the sidelink relay discovery message priority threshold configured in the sidelink relay discovery message transmission gap, the UE may determine that an uplink message MAC PDU to be transmitted is preferentially transmitted.

When a condition according to at least one of the above operations is satisfied, the UE may determine that the MAC PDU including the sidelink relay discovery message may be transmitted.

When the UE determines in operation 909 that the MAC PDU including the sidelink relay discovery message may be transmitted according to the determination of operation 907, the UE may proceed to operation 911, and may transmit the MAC PDU including the sidelink relay discovery message in a lower layer (e.g., a physical layer). In operation 909, the UE may determine that the MAC PDU including the sidelink relay discovery message may not be transmitted. That is, the UE may determine that at least one of the RACH preamble, MAC PDU of Msg3 buffer, MAC PDU of MSGA buffer, and the uplink message MAC PDU to be transmitted via uplink should be transmitted. In this case, in operation 913, the UE may transmit at least one of the RACH preamble, MAC PDU of Msg3 buffer, MAC PDU of MSGA buffer, and the uplink message MAC PDU in a lower layer (e.g., a physical layer).

Alternatively, when the UE determines in operation 903 that the sidelink relay discovery message transmission gap is not configured, in operation 915, the UE may perform an operation that is the same as or similar to operation 703 of FIG. 7 when the sidelink relay discovery message MAC PDU is configured. The UE may determine whether the sidelink relay discovery message MAC PDU configured in operation 915 may be transmitted. Operation 915 may be the same as operation 707 of FIG. 7. When the UE determines in operation 915 that the MAC PDU including the sidelink relay discovery message may be transmitted, the UE may proceed to operation 909 and may transmit the MAC PDU including the sidelink relay discovery message in a lower layer (e.g., a physical layer). When the UE determines in operation 915 that the MAC PDU including the sidelink relay discovery message may not be transmitted, in operation 913, the UE may transmit a MAC PDU of another message or signaling determined to be preferentially transmitted over the MAC PDU including the sidelink relay discovery message in a lower layer (e.g., a physical layer).

According to an embodiment of the disclosure, a sidelink relay discovery message transmission gap or a sidelink relay discovery message reception gap may be configured in a UE to transmit or receive a sidelink relay discovery message. In this case, the UE may determine whether to prioritize an operation of transmitting the sidelink relay discovery message in the sidelink relay discovery message transmission gap or prioritize an uplink message over an operation of transmitting the sidelink relay discovery message in the sidelink relay discovery message transmission gap. Also, the UE may determine whether to prioritize an operation of receiving the sidelink relay discovery message in the sidelink relay discovery message reception gap or prioritize an uplink message over an operation of receiving the sidelink relay discovery message in the sidelink relay discovery message reception gap. As described above, when the sidelink relay discovery message transmission gap or the sidelink relay discovery message reception gap is configured in the UE, a condition used to determine an operation to be prioritized by the UE may include at least one of the following conditions.

Also, at least one of the following conditions may be used as a condition under which the UE determines that an uplink message is prioritized over the sidelink relay discovery message transmission gap and/or the sidelink relay discovery message reception gap. When the UE determines that the uplink message is prioritized over the sidelink relay discovery message transmission gap and/or the sidelink relay discovery message reception gap according to a configured condition, the UE may prioritize transmission and/or reception of an uplink message MAC PDU over the sidelink relay discovery message transmission gap and/or the sidelink relay discovery reception gap. When the UE determines that the uplink message is not prioritized over the sidelink relay discovery message transmission gap and/or the sidelink relay discovery message reception gap according to a configured condition, the UE may prioritize transmission and/or reception of a sidelink relay discovery message MAC PDU in the sidelink relay discovery message transmission gap and/or the sidelink relay discovery reception gap.

The conditions described above may be as follows.
(1) An uplink message includes at least one of an RACH preamble, MAC PDU of Msg3 buffer, and MAC PDU of MSGA buffer.
(2) A priority value of a MAC PDU including an uplink message is lower than a priority value of a MAC PDU including a sidelink relay discovery message. (e.g., a message of a service requiring low latency, such as URLLC, is configured to be prioritized over the sidelink relay discovery message)
(3) A priority value of a MAC PDU including an uplink message is lower than an uplink message priority threshold. (e.g., a message of a service requiring low latency, such as URLLC, is configured to be prioritized over a sidelink relay discovery message)
(4) A priority value of a MAC PDU including a sidelink relay discovery message is equal to or higher than a sidelink relay discovery message priority threshold.. (or is higher than the sidelink relay discovery message priority threshold.)
(5) An uplink message logical channel is included in uplink logical channel identification information in which a sidelink relay discovery message transmission gap is limited. (The UE is configured to prioritize a MAC PDU including the uplink logical channel corresponding to the uplink logical channel identification information over the sidelink relay discovery message transmission gap.)
(6) An uplink message logical channel is included in uplink logical channel identification information in which a sidelink relay discovery message reception gap is limited. (The UE is configured to prioritize a MAC PDU including the uplink logical channel corresponding to the uplink logical channel identification information over the sidelink relay discovery message reception gap.)
(7) A sidelink relay discovery message logical channel is included in sidelink relay discovery message logical channel identification information in which a sidelink relay discovery message transmission gap is limited. (The UE is configured to not use the transmission gap for the purpose of a sidelink relay discovery message logical channel corresponding to the sidelink relay discovery message logical channel identification information and to prioritize a MAC PDU including an uplink logical channel.)
(8) A sidelink relay discovery message logical channel is included in sidelink relay discovery message logical channel identification information in which a sidelink relay discovery message reception gap is limited. (The UE is configured to not use the reception gap for the purpose of the sidelink relay discovery message logical channel corresponding to the sidelink relay discovery message logical channel identification information and to prioritize a MAC PDU including an uplink logical channel.)

Configuration information of a sidelink relay discovery message transmission gap and/or a sidelink relay discovery message reception gap obtained by the UE from the BS or obtained from pre-configured information may include at least one of the following.
(1) Sidelink relay discovery message transmission gap pattern
(2) Uplink logical channel identifier in which a sidelink relay discovery message transmission gap is limited (logical channel identifier of an uplink message that may be prioritized over a transmission gap)
(3) Uplink priority threshold in which a sidelink relay discovery message transmission gap is limited (priority threshold used to determine a logical channel of an uplink message that may be prioritized over a transmission gap)
(4) Sidelink relay discovery message priority threshold in which a sidelink relay discovery message transmission gap is limited (priority threshold used to determine a logical channel of a sidelink relay discovery message that may not use a transmission gap)
(5) Sidelink relay discovery message logical channel identifier in which a sidelink relay discovery message transmission gap is limited (logical channel identifier of a sidelink relay discovery message that may not use a transmission gap)
(6) Sidelink message logical channel identifier in which a sidelink relay discovery message transmission gap is limited (logical channel identifier of a sidelink message that may not use a transmission gap, this may be applied when a general sidelink message may be included in a sidelink relay discovery message MAC PDU as in an embodiment of FIG. 8. This may be used as information for determining whether it is a general sidelink message logical channel that may be included in a sidelink relay discovery message MAC PDU.)
(7) Sidelink relay discovery message reception gap pattern
(8) Uplink logical channel identifier in which a sidelink relay discovery message reception gap is limited (logical channel identifier of an uplink message that may be prioritized over a reception gap)
(9) Uplink priority threshold in which a sidelink relay discovery message reception gap is limited (priority threshold used to determine an uplink message logical channel that may be prioritized over a reception gap)
(10) Sidelink relay discovery message priority threshold in which a sidelink relay discovery message reception gap is limited (priority threshold used to determine a logical channel of a sidelink relay discovery message that may not use a reception gap)
(11) Sidelink relay discovery message logical channel identifier in which a sidelink relay discovery message reception gap is limited (logical channel identifier of a sidelink relay discovery message that may not use a reception gap)
(12) Sidelink message logical channel identifier in which a sidelink relay discovery message reception gap is limited (logical channel identifier of a sidelink message that may not use a transmission gap, this may be applied when a general sidelink message may be included in a sidelink relay discovery message MAC PDU as in an embodiment of FIG. 8. This may be used as information for determining whether it is a general sidelink message logical channel that may be included in a sidelink relay discovery message MAC PDU.

In a wireless communication system according to an embodiment of the disclosure, a method by which a user equipment (UE) transmits a sidelink relay discovery message in a wireless communication system includes identifying a priority of a logical channel corresponding to the sidelink relay discovery message, and transmitting the sidelink relay discovery message, based on the identified priority.

In an embodiment, the method may further include configuring a medium access control protocol data unit (MAC PDU) including the sidelink relay discovery message, based on the identified priority, and transmitting the MAC PDU including the sidelink relay discovery message. In an embodiment, the MAC PDU including the sidelink relay discovery message may be configured not include a general sidelink message. In an embodiment, the method may further include transmitting the MAC PDU including the sidelink relay discovery message, based on the identified priority.

In an embodiment, the priority of the logical channel corresponding to the sidelink relay discovery message may be a value pre-configured in the UE.

In an embodiment, the priority of the logical channel corresponding to the sidelink relay discovery message may have a fixed value.

In an embodiment, the priority of the logical channel corresponding to the sidelink relay discovery message may be set to 1 corresponding to a highest priority.

In a wireless communication system according to an embodiment of the disclosure, a user equipment (UE) operating as a sidelink relay UE or a sidelink remote UE in a wireless communication system includes a transceiver, a memory, and a processor operatively connected to the transceiver and the memory, the processor being configured to identify a priority of a logical channel corresponding to a sidelink relay discovery message, and transmit the sidelink relay discovery message, based on the identified priority.

In an embodiment, the processor may be further configured to configure a medium access control protocol data unit (MAC PDU) including the sidelink relay discovery message, based on the identified priority, and transmit the MAC PDU including the sidelink relay discovery message. In an embodiment, the MAC PDU including the sidelink relay discovery message may be configured not to include a general sidelink message. In an embodiment, the processor may be further configured to transmit the MAC PDU including the sidelink relay discovery message, based on the identified priority.

In an embodiment, the priority of the logical channel corresponding to the sidelink relay discovery message may be a value pre-configured in the UE.

In an embodiment, the priority of the logical channel corresponding to the sidelink relay discovery message may have a fixed value.

In an embodiment, the priority of the logical channel corresponding to the sidelink relay discovery message may be set to 1 corresponding to a highest priority.

Methods according to the claims of the disclosure or the embodiments described in the specification may be implemented by hardware, software, or a combination of hardware and software.

When the methods are implemented by software, a computer-readable storage medium storing one or more programs (software modules) may be provided. The one or more programs stored in the computer-readable storage medium are configured to be executed by one or more processors in an electronic device. The one or more programs include instructions for allowing the electronic device to execute the methods according to the claims or the embodiments of the disclosure.

The programs (e.g., software modules or software) may be stored in a random-access memory (RAM), a non-volatile memory including a flash memory, a read-only memory (ROM), an electrically erasable programmable read-only memory (EEPROM), a magnetic disc storage device, a compact disc-ROM (CD-ROM), a digital versatile disc (DVD), another optical storage device, a magnetic cassette, or a combination of some or all of the above. Also, each of the memories may include a plurality of memories.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may be connected through an external port to an apparatus for performing an embodiment of the disclosure. Also, a separate storage device on a communication network may be connected to an apparatus for performing an embodiment of the disclosure.

In detailed embodiments of the disclosure, elements included in the disclosure have been expressed as singular or plural according to the detailed embodiments of the disclosure. However, singular or plural representations are selected appropriately for the sake of convenience of explanation, the disclosure is not limited to the singular or plural elements, and even expressed as a singular element, it may be composed of plural elements, and vice versa.

Although specific embodiments of the disclosure are described in the detailed description of the disclosure, various modifications may be made without departing from the scope of the disclosure. Hence, the scope of the disclosure is not limited to the above embodiments of the disclosure, and may be defined by not only the following claims but also equivalents thereof.

## Claims

1. A method performed by a user equipment (UE) for transmitting a sidelink relay discovery message in a wireless communication system, the method comprising:
identifying a priority of a logical channel corresponding to the sidelink relay discovery message; and
transmitting the sidelink relay discovery message, based on the identified priority.

2. The method of claim 1, further comprising:
configuring a medium access control protocol data unit (MAC PDU) including the sidelink relay discovery message, based on the identified priority; and
transmitting the MAC PDU including the sidelink relay discovery message.

3. The method of claim 2, wherein the MAC PDU including the sidelink relay discovery message is configured not to include a general sidelink message.

4. The method of claim 1, wherein the priority of the logical channel corresponding to the sidelink relay discovery message is a value pre-configured in the UE.

5. The method of claim 1, wherein the priority of the logical channel corresponding to the sidelink relay discovery message is a fixed value.

6. The method of claim 1, wherein the priority of the logical channel corresponding to the sidelink relay discovery message is set to 1 corresponding to a highest priority.

7. The method of claim 2, further comprising: transmitting the MAC PDU including the sidelink relay discovery message, based on the identified priority.

8. A user equipment (UE) operating as a sidelink relay UE or a sidelink remote UE in a wireless communication system, the UE comprising:
a transceiver;
a memory; and
a processor operatively connected to the transceiver and the memory, the processor being configured to:
identify a priority of a logical channel corresponding to a sidelink relay discovery message, and
transmit the sidelink relay discovery message, based on the identified priority.

9. The UE of claim 8, wherein the processor is further configured to
configure a medium access control protocol data unit (MAC PDU) including the sidelink relay discovery message, based on the identified priority, and
transmit the MAC PDU including the sidelink relay discovery message.

10. The UE of claim 9, wherein the MAC PDU including the sidelink relay discovery message is configured not to include a general sidelink message.

11. The UE of claim 8, wherein the priority of the logical channel corresponding to the sidelink relay discovery message is a value pre-configured in the UE.

12. The UE of claim 8, wherein the priority of the logical channel corresponding to the sidelink relay discovery message is a fixed value.

13. The UE of claim 8, wherein the priority of the logical channel corresponding to the sidelink relay discovery message is set to 1 corresponding to a highest priority.

14. The UE of claim 9, wherein the processor is further configured to transmit the MAC PDU comprising the sidelink relay discovery message, based on the identified priority.
